(19) Europäisches Patentamt
European Patent Office
Office européen des brevets

(11) EP 2 699 371 B1

(12) **EUROPÄISCHE PATENTSCHRIFT**

(45) Veröffentlichungstag und Bekanntmachung des Hinweises auf die Patenterteilung:
**15.04.2015 Patentblatt 2015/16**

(21) Anmeldenummer: **12703518.6**

(22) Anmeldetag: **08.02.2012**

(51) Int Cl.:
***B23B 31/36*** (2006.01)    ***B23Q 11/10*** (2006.01)

(86) Internationale Anmeldenummer:
**PCT/EP2012/052078**

(87) Internationale Veröffentlichungsnummer:
**WO 2012/143148 (26.10.2012 Gazette 2012/43)**

(54) **WERKZEUGKOPF MIT ZERSTÄUBERSYSTEM FÜR KÜHLSCHMIERSTOFF-AEROSOL UND VERFAHREN ZUM WENIGSTENS TEILWEISEN BEAUFSCHLAGEN EINES WERKSTÜCKS MIT AEROSOL MITTELS EINER DÜSENEINRICHTUNG IN DEM WERKZEUGKOPF**

TOOL HEAD HAVING AN ATOMISING SYSTEM FOR COOLING LUBRICANT AEROSOL AND METHOD OF AT LEAST PARTIALLY SUPPLY A WORKPIECE WITH AEROSOL BY MEANS OF A SPRAYING DEVICE IN THE TOOL HEAD

TÊTE D'OUTIL DOTÉE D'UN SYSTÈME DE PULVÉRISATION POUR UN AÉROSOL RÉFRIGÉRANT LUBRIFIANT ET PROCÉDÉ POUR FOURNIR AU MOINS PARTIELLEMENT DE L'AÉROSOL À UNE PIÈCE AU MOYEN D'UN PULVÉRISATEUR DANS LA TÊTE D'OUTIL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.04.2011 DE 102011007706**

(43) Veröffentlichungstag der Anmeldung:
**26.02.2014 Patentblatt 2014/09**

(73) Patentinhaber: **Komet Group GmbH**
**74354 Besigheim (DE)**

(72) Erfinder:
• **FRONIUS, Jürgen**
**74399 Walheim/Neckar (DE)**
• **STOLZ, Gerhard**
**74379 Ingersheim (DE)**

(74) Vertreter: **Gauss, Nikolai et al**
**Wolf & Lutz Patentanwälte**
**Hauptmannsreute 93**
**70193 Stuttgart (DE)**

(56) Entgegenhaltungen:
**EP-A2- 1 072 356    DE-A1-102007 001 220**

EP 2 699 371 B1

## Beschreibung

Die Erfindung betrifft einen Werkzeugkopf nach dem Oberbegriff von Anspruch 1 und ein Verfahren zum wenigstens teilweisen Beaufschlagen eines Werkstücks mit Aerosol mittels einer Düseneinrichtung in einem Werkzeugkopf, die aus der EP 1 072 356 A bekannt sind.

Ein Werkzeugkopf ist aus der EP 0 491 724 B1 bekannt. Dort ist ein Werkzeugkopf für den Einsatz in einer Werkzeugmaschine beschrieben. Der Werkzeugkopf hat einen Grundkörper, der um eine Drehachse rotiert. Der Werkzeugkopf enthält einen Schieber. Der Schieber dient als Aufnahme für ein Schneidwerkzeug. Der Schieber ist in einer Linearführung aufgenommen. In der Linearführung kann der Schieber mit einem Schneidwerkzeug entlang einer Verstellachse bewegt werden. Werkzeugköpfe mit einem verstellbaren Schieber ermöglichen z. B. das präzise und kostengünstige Bearbeiten von Werkstücken mit Flanschflächen, Wellenkonturen und Bohrungen, die eine Hinterschneidungsgeometrie haben.

In der spanenden Metallbearbeitung werden verbreitet Wasser-Öl-Emulsionen als Kühlschmierstoff eingesetzt. Mit diesem Kühlschmierstoff kann die Reibung zwischen Werkstück und Werkzeug sowie zwischen Span und Spanfläche verringert werden. Der Verschleiß eines Werkzeugs wird hierdurch herabgesetzt und damit dessen Standzeit erhöht. Darüber hinaus ermöglicht der Kühlschmierstoff, die bei der Spanbildung entstehende Wärme abzuführen und den Eingriffsbereich des Werkzeugs in das Werkstück von Spänen zu befreien. Wasser-Öl-Emulsionen belasten die Umwelt. Ihre Entsorgung ist teuer. Wasser-Öl-Emulsionen können nur mit hohem Aufwand wieder aufbereitet werden.

Um den Verbrauch von Kühlschmierstoff bei Zerspanungsprozessen zu verringern, ist es bekannt, Aerosole für das Kühlen und Schmieren der Schneidwerkzeuge einzusetzen. Solche Aerosole enthalten ein Gemisch aus Luft oder einem anderen gasförmigen Fluid und Kühlschmierstoff, wie z. B. Öl oder Wasser-Ölemulsion. Bei Zerspanungsprozessen ermöglichen Aerosole das Kühlen und Schmieren mit minimalen Stoffmengen. Damit beim Kühlen und Schmieren mit Aerosolen Werkzeuge, Werkzeugmaschinen und Werkstücken keinen Schaden nehmen, ist es allerdings unbedingt erforderlich, dass der Bereich, in dem ein Schneidwerkzeug mit einem Werkstück in Eingriff ist, ununterbrochen mit Aerosol zum Kühlen und Schmieren beaufschlagt wird. In Werkzeugmaschinen werden hierzu Systeme für Minimalmengenschmierung (MMS) bzw. Minimalmengen-Kühlschmierung (MMKS) eingesetzt. Die Fluidleitungen in solchen System müssen gewährleisten, dass sich das darin geführte Aerosol nicht entmischt. Das bedeutet, dass diese Fluidleitungen nicht nur weitgehend gerade verlaufen, sondern auch einen großen Leitungsquerschnitt haben müssen. Darüber hinaus ist es technisch aufwändig, Aerosolnebel so zu erzeugen, dass er auch schnellen Relativbewegungen von Werkzeug und Werkstück zuverlässig folgt.

Aufgabe der Erfindung ist es, einen Werkzeugkopf mit Schieber für die Aufnahme von Schneidwerkzeugen bereitzustellen, mit dem auch die Minimalmengenschmierung bzw. Minimalmengen-Kühlschmierung von Schneidwerkzeugen an dem Schieber zuverlässig möglich ist.

Diese Aufgabe wird durch einen Werkzeugkopf mit den Merkmalen des Anspruchs 1 gelöst.

Der Erfindung liegt insbesondere die Erkenntnis zugrunde, dass die Fliehkräfte in einem Werkzeugkopf, der sich an der rotierenden Maschinenspindel einer Werkzeugmaschine befindet, nach Art einer Zentrifuge in achsfern angeordneten Leitungen eine Entmischung von Aerosol bewirken können. Weil die Schneidwerkzeuge an Werkzeugköpfen mit Schieber aufgrund des technischen Fortschritts bei zunehmend höheren Drehzahlen betrieben werden, d.h. bis in den Bereich von 20.000 Umdrehungen pro Minute, müssen die Leitungen für das Transportieren von Aerosol im Grundsatz durchgehend in der Rotationsachse verlaufen. In Werkzeugköpfen mit Schieber können dort aber aufgrund des Schiebergetriebes keine durchgängigen Leitungen verlegt werden.

Eine Idee der Erfindung ist es deshalb, das Zerstäubersystem in dem Werkzeugkopf mit einer vorzugsweise an dem Schieber aufgenommenen Düseneinrichtung für das Erzeugen von Kühlschmierstoff-Aerosol auszubilden. Diese Düseneinrichtung wird in dem Werkzeugkopf über eine Leitung für gasförmiges Fluid und über eine Leitung für Kühlschmierstoff mit gasförmigem Fluid, insbesondere Druckluft, und mit Kühlschmierstoff versorgt. Auf diese Weise können die Düseneinrichtungen über Leitungen mit Fluid gespeist werden, die auch stark gekrümmte Abschnitte aufweisen und bei denen anders als bei Leitungen für Aerosol sogenannte Tot- und Versackungsräume keine Auswirkung auf die Zusammensetzung des Aerosols haben. Da die Flüssigkeit und das gasförmige Fluid hier voneinander getrennt geführt werden, kann es in den Leitungen insbesondere keine Entmischung geben.

Die Düseneinrichtung enthält vorzugsweise einen Hohlraum mit einer als Venturidüse wirkenden Mischkammer, die eine Austrittsöffnung hat. Dieser Mischkammer wird das gasförmige Fluid durch einen mit der Leitung für gasförmiges Fluid verbundenen Fluidkanal und der Kühlschmierstoff davon getrennt durch einen mit der Leitung für Kühlschmierstoff verbundenen Fluidkanal zugeführt. Diese Maßnahme ermöglicht, dass das Aerosol erst in dem Schieber oder in einem zu dem Werkstück weisenden Abschnitt des Werkzeugkopfs unmittelbar in der Nähe des Schneidwerkzeugs gebildet wird. Da es von dort innerhalb kürzester Zeit an das Schneidwerkzeug gelangt, kann es sich auch bei hohen Drehzahlen des Werkzeugkopfs nicht spürbar entmischen. Darüber hinaus kann auf diese Weise das Schneidwerkzeug zusammen mit den entsprechenden Abschnitten eines Werkstücks auch in engen Bohrungen bei der spanenden Materialverarbeitung zuverlässig mit Aerosol beaufschlagt werden.

Für das Freigeben und Versperren der Austrittsöffnung der Mischkammer hat die Düseneinrichtung vorzugsweise einen Schließkörper, der vorzugsweise parallel zu der Rotationsachse bewegbar ist. Durch Verlagern des Schließkörpers kann auch das Volumen der Mischkammer variiert werden. Mit dem Schließkörper wird der Hohlraum in der Düseneinrichtung in eine Mischkammer und eine Steuerkammer aufgeteilt. Dies ermöglicht, dass sich der Schließkörper in der Düseneinrichtung aufgrund einer Druckdifferenz zwischen der Misch- und Steuerkammer definiert verlagern lässt. Günstig ist es, für den Schließkörper in der Düseneinrichtung einen einstellbaren Hub vorzusehen. Damit kann die Zusammensetzung des in der Düseneinrichtung erzeugten Aerosols und die pro Zeiteinheit erzeugte Menge an Aerosol variiert werden. Mit der zu der Werkzeugkopfachse parallelen Ausrichtung der Bewegungsachse des Schließkörpers wird erreicht, dass der Schließkörper nicht aufgrund von bei der rotatorischen Bewegung des Werkzeugkopfes um die Drehachse einer Maschinenspindel auftretenden Fliehkräfte verstellt wird.

Für das Bewegen des Schließkörpers kann die Düseneinrichtung einen elektrischen Antrieb enthalten. Als Antrieb für das Bewegen des Schließkörpers eignet sich z. B. ein magnetoelektrischer oder ein piezoelektrischer Antrieb. Indem dieser Antrieb aufgrund des Signals eines Sensors für das Erfassen der Druckluftströmung gesteuert wird, mit welcher die Düseneinrichtung beaufschlagt wird, ist es möglich, den Anteil des Öls in dem mit der Düseneinrichtung erzeugten Aerosol auch bei Druckschwankungen in dem Druckluftleitungssystem im Wesentlichen konstant zu halten.

Die Steuerkammer der Düseneinrichtung ist vorzugsweise über ein Differenzdruckventil für das Einstellen des Drucks in der Steuerkammer an die Leitung für gasförmiges Fluid angeschlossen. Auch das Differenzdruckventil hat vorzugsweise einen linearbeweglichen Schließkörper. Der Schließkörper des Differentialdruckventils ist mit der Kraft eines Federmittels an dem Ventilkörper abgestützt.

In dem Differenzdruckventil wird vorzugsweise in einer ersten Einstellung mit dem linearbeweglichen Schließkörper ein mit der Steuerkammer verbundener Steuerkanal abgesperrt, wenn die Druckdifferenz zwischen dem Druck in der Mischkammer und dem Druck in der Steuerkammer einen ersten Schwellwert übersteigt. In einer von der ersten Einstellung verschiedenen Einstellung des Schließkörpers in dem Differenzdruckventil dagegen wird die Leitung für gasförmiges Fluid vorzugsweise mit dem Steuerkanal verbunden. In dieser Einstellung ist zwischen der Leitung für gasförmiges Fluid und der Steuerleitung ein Druckausgleich möglich. Dieser Druckausgleich erfolgt, wenn die Druckdifferenz zwischen dem Druck in der Mischkammer und dem Druck in der Steuerkammer einen von dem ersten Schwellwert verschiedenen zweiten Schwellwert übersteigt, der kleiner ist als der erste Schwellwert. In einer dritten Einstellung des linearbeweglichen Schließkörpers wird die Steuerkammer vorzugsweise belüftet. Diese dritte Einstellung wird von dem linearbeweglichen Schließkörper eingenommen, wenn die Druckdifferenz zwischen dem Druck in der Mischkammer und dem Druck in der Steuerkammer einen von dem ersten Schwellwert verschiedenen dritten Schwellwert unterschreitet, der kleiner ist als der zweite Schwellwert.

Der Schließkörper steht vorzugsweise mit einem Krafterzeugungsmittel in Wirkverbindung, das eine an dem Schließkörper angreifende Druckkraft kompensiert. Bevorzugt ist das Krafterzeugungsmittel ein Federelement mit einer veränderbaren Vorspannung für das Einstellen der Druckdifferenz zwischen dem Druck in der Mischkammer und dem Druck in der Steuerkammer. Das Krafterzeugungsmittel kann auch ein günstigerweise als Linearmotor ausgebildeter Elektromotor oder ein Piezo-Stellelement für das Einstellen des Drucks in der Steuerkammer sein. Die Maßnahme ermöglicht das elektronische Steuern oder Regeln der Druckdifferenz zwischen dem Druck in der Druckkammer und dem Druck in der Steuerkammer.

Der bewegliche Schließkörper des Differenzdruckventils ist vorzugsweise in einem Ventilkörper mit einer zu der Werkzeugkopfachse parallelen Bewegungsachse geführt. Dabei ist es von Vorteil, wenn die Bewegungsachse des Ventilkörpers mit der Werkzeugkopfachse fluchtet oder einen lediglich geringen Abstand zu der Werkzeugkopfachse hat. Diese Maßnahme gewährleistet, dass unterschiedliche Drehzahlen des Werkzeugkopfs in der Maschinenspindel einer Werkzeugmaschine auf das Drucksteuerverhalten des Differenzdruckventils keinen Einfluss haben.

In der Leitung für Kühlschmierstoff ist ein mit dem Druck in der Leitung für gasförmiges Fluid gesteuertes Absperrventil vorzugsweise angeordnet. Dieses Absperrventil ist bevorzugt am Schieber aufgenommen. Es unterbindet die Zufuhr von Kühlschmierstoff in die Düseneinrichtung, wenn der Druck in der Leitung für gasförmiges Fluid einen Schwellwert unterschreitet. Das Erzeugen von Aerosol mit dem Zerstäubersystem in dem Werkzeugkopf kann so insbesondere über das Druckluftsystem einer Werkzeugmaschine präzise gesteuert werden. Auch das Absperrventil hat vorzugsweise einen Schließkörper. Der Schließkörper des Absperrventils ist in einer zu der Werkzeugkopfachse parallelen Linearführung aufgenommen. In einer ersten Einstellung sperrt dieser Schließkörper vorzugsweise die Leitung für Kühlschmierstoff. In einer von der ersten Einstellung verschiedenen zweiten Einstellung wird die Leitung für Kühlschmierstoff vorzugsweise von dem Schließkörper freigegeben. Das Absperrventil hat vorzugsweise eine mit der Leitung für gasförmiges Fluid verbundene Steuerkammer. Über diese Steuerkammer kann der Schließkörper gegen die Kraft eines Federmittels mit einer Druckkraft beaufschlagt werden.

Der Grundkörper des Werkzeugkopfs hat vorzugsweise einen Schaft mit einem als Passzapfen ausgebildeten Abschnitt für den Anschluss an die rotierende Maschinenspindel einer Werkzeugmaschine. Es ist von Vorteil, wenn es an diesem eine Schnittstelle für die Übergabe von Kühlschmierstoff aus einem Kühlschmierstoff-Kanal gibt, der in einer in der Maschinenspindel einer Werkzeugmaschine angeordneten Lanze ausgebildet ist. Auf diese Weise kann das Zerstäubersystem in dem Werkzeugkopf in das Schmiersystem einer Werkzeugmaschine integriert werden.

Der Grundkörper des Werkzeugkopfs kann auch einen Schaft mit einem als Passzapfen ausgebildeten Abschnitt für den Anschluss an die rotierende Maschinenspindel einer Werkzeugmaschine aufweisen. Indem der Schaft eine Schnittstelle für die Übergabe von Medien aus einem Kanal für Medien, Druckluft und / oder flüssigen Kühlschmierstoff in der Maschinenspindel einer Werkzeugmaschine hat, kann das Zerstäubersystem in dem Werkzeugkopf mit Medien aus der Maschinenspindel beaufschlagt werden. Es ist von Vorteil, wenn vorzugsweise der Grundkörper ein zusätzliches Ventil enthält, das die Leitung für Kühlschmierstoff in dem Grundkörper verschließt, sobald der Werkzeugkopf von einer Maschinenspindel getrennt wird.

Günstig ist es, wenn die Schnittstelle für die Übergabe von Kühlschmierstoff aus einem Kanal für Kühlschmierstoff ausgelegt ist, der sich in einer Maschinenspindel einer Werkzeugmaschine angeordneten Lanze befindet. Darüber hinaus ist es möglich, die Schnittstelle so auszubilden, dass aus einem den Kanal für Kühlschmierstoff in der Lanze koaxial umgebenden Kanal Druckluft in den Werkzeugkopf geführt werden kann.

Der Erfindung liegt auch ein Verfahren mit den Merkmalen des Anspruchs 21 zu Grunde.

Im Folgenden wird die Erfindung anhand der in der Zeichnung in schematischer Weise dargestellten Ausführungsbeispiele näher erläutert.

Es zeigen:

Fig. 1        einen ersten Werkzeugkopf mit einer Düseneinrichtung für das Erzeugen von Aerosol aus Druckluft und Kühlschmierstoff;

Fig. 2        einen Abschnitt des Werkzeugkopfs mit einer Maschinenspindel;

Fig. 3        sowie Fig. 4 ein Absperrventil mit einer Leitung für Kühlschmierstoff;

Fig. 5        und Fig. 6 die Düseneinrichtung in dem Werkzeugkopf in unterschiedlichen Einstellungen;

Fig. 7        Fig. 8 und Fig. 9 ein Drucksteuerventil im Werkzeugkopf in unterschiedlichen Einstellungen;

Fig. 10a      und Fig. 10b alternative Drucksteuerventile für den Einsatz in dem Werkzeugkopf;

Fig. 11       einen zweiten Werkzeugkopf mit einer Düseneinrichtung für das Erzeugen von Aerosol aus Druckluft und Kühlschmierstoff;

Fig. 12       den Werkzeugkopf mit einer Maschinenspindel;

Fig. 13       einen dritten Werkzeugkopf mit einer Düseneinrichtung für das Erzeugen von Aerosol aus Druckluft und Kühlschmierstoff; und

Fig. 14       die Düseneinrichtung in dem Werkzeugkopf.

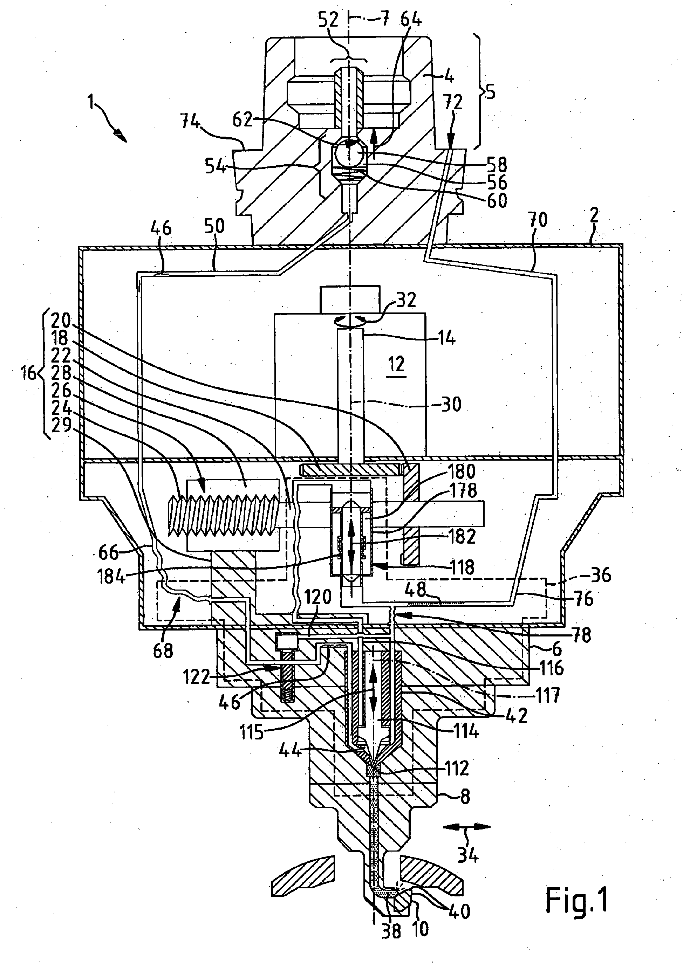

Der Werkzeugkopf 1 in Fig. 1 hat einen Grundkörper 2 mit einem Schaft 4, der einen als Passzapfen ausgebildeten Abschnitt 5 hat. Dieser als Passzapfen ausgebildete Abschnitt 5 dient für den Anschluss des Werkzeugskopfs 1 an die rotierende Maschinenspindel einer nicht weiter gezeigten Werkzeugmaschine. Der Werkzeugkopf 1 hat eine Werkzeugkopfachse 7. Die Achse 7 ist eine Drehachse. Bei Anschluss an die rotierende Maschinenspindel einer Werkzeugmaschine wird der Werkzeugkopf 1 um die Achse 7 gedreht. Der Grundkörper 2 des Werkzeugkopfs 1 hat einen beweglichen Schieber 6. Der Schieber 6 ist in einem am Grundkörper 2 ausgebildeten Lager linearbeweglich geführt. An den Schieber 6 ist ein Werkzeughalter 8 angeschlossen, der ein Schneidwerkzeug 10 trägt.

Für das Bewegen des Schiebers 6 enthält der Werkzeugkopf 1 einen elektrischen Stellmotor 12. Der Stellmotor 12 ist in dem Grundkörper 2 des Werkzeugkopfs 1 aufgenommen. Der Stellmotor 12 hat eine Antriebswelle 14. Der Schieber 6 und die Antriebswelle 14 ist mittels eines Getriebes 16 bewegungsgekoppelt. Das Getriebe 16 enthält ein Antriebsritzel 18, das mit einem Stirnrad 20 in Eingriff ist. Das Stirnrad 20 ist starr auf einer drehbar gelagerten Spindel 22 angeordnet. Die Spindel 22 hat ein Außengewinde 24, das in eine Verzahnung 26 in einem Verzahnungsblock 28 eingreift. Der Verzahnungsblock 28 ist an einem Linearführungselement 29 des Schiebers 6 festgelegt. Mit dem Linearführungselement 29 ist der Schiebers 6 in einer Linearführung in dem Grundkörper 2 des Werkzeugkopfs 1 linearbeweglich geführt. Das Getriebe 16 wandelt eine Drehbewegung der Antriebswelle 14 in eine Linearbewegung des Schiebers 6. Damit kann durch Bewegen der Antriebswelle 14 um die Wellenachse 30 entsprechend dem Doppelpfeil 32 das an dem Werkzeughalter 8 angeordnete Schneidwerkzeug 10 entsprechend dem Doppelpfeil 34 verlagert werden.

In dem Werkzeugkopf 1 gibt es ein Zerstäubersystem 36 für das Bereitstellen von Kühlschmierstoff-Aerosol 38 an den wirksamen Schneidkanten 40 des Schneidwerkzeugs 10. Das Zerstäubersystem 36 enthält eine Düseneinrichtung 42, mit der Kühlschmierstoff-Aerosol 38 erzeugt werden kann. Die Düseneinrichtung 42 hat eine Mischkammer 44. In der Mischkammer 44 kann Kühlschmierstoff 46, etwa in Form von Öl, das der Mischkammer 44 zugeführt wird, mit Druckluft 48, die in die Mischkammer 44 geleitet wird, zu Kühlschmierstoff-Aerosol 38 vermischt werden.

Für das Zuführen von Kühlschmierstoff 46 in die Mischkammer 44 der Düseneinrichtung 42 enthält der Werkzeugkopf 1 ein Leitungssystem 50 für Kühlschmierstoff. Das Leitungssystem 50 für Kühlschmierstoff hat eine Schnittstelle 52 für die Übergabe von Kühlschmierstoff aus einem Kanal einer in der Maschinenspindel einer Werkzeugmaschine angeordneten Lanze. In dem Leitungssystem 50 für Kühlschmierstoff gibt es ein Rückschlagventil 54. Das Rückschlagventil 54 wirkt als Absperrventil. Das Rückschlagventil 54 hat eine Ventilkammer 56, die eine Ventilkugel 58 enthält und in der eine Ventilfeder 60 angeordnet ist. Die Ventilfeder 60 drückt die Ventilkugel 58 in einen Ventilsitz 62. Wenn an der Schnittstelle 52 des Leitungssystems 50 Öl mit einem Öldruck bereitgestellt wird, der einen Schwellwert übersteigt, wird die Ventilkugel 58 gegen die Kraft der Ventilfeder 60 in der Richtung des Pfeils 64 aus dem Ventilsitz 62 bewegt.

Anstelle des Rückschlagventils 54 kann in den Werkzeugkopf 1 grundsätzlich auch ein hydraulisch, elektrisch oder auch pneumatisch angesteuertes Ventil eingesetzt werden, um das Austreten von Kühlschmierstoff aus dem Leitungssystem 50 in dem Werkzeugkopf 1 zu unterbinden, wenn der Werkzeugkopf von der Maschinenspindel getrennt ist.

In dem Leitungssystem 50 wird das Öl 46 durch eine Leitung 66 von dem Rückschlagventil 54 zu dem Linearführungselement 29 des Schiebers 6 geführt. Die Leitung 66 hat einen beweglichen Abschnitt 68. Mit dem beweglichen Abschnitt 68 kann eine Verstellbewegung des Schiebers 6 relativ zu dem Schaft 4 des Werkzeugkopfs 1 ausgeglichen werden.

Um die Düseneinrichtung 42 mit Druckluft zu versorgen, gibt es in dem Werkzeugkopf 1 ein Leitungssystem 70 für Druckluft. Das Leitungssystem 70 hat eine Schnittstelle 72 für die Übergabe von Druckluft aus einer Druckluftleitung in der Maschinenspindel einer Werkzeugmaschine. Die Schnittstelle 72 befindet sich an einem zu der Maschinenspindel weisenden rückwärtigen Flanschabschnitt 74 des Schafts 4. Das Leitungssystem 70 enthält eine Druckluftleitung 76 mit einem beweglichen Abschnitt 78. Mit dem beweglichen Abschnitt 78 kann eine Verstellbewegung des Schiebers 6 ausgeglichen werden. Die Leitung 76 verbindet die Schnittstelle 72 mit der Mischkammer 44 der Düseneinrichtung 42.

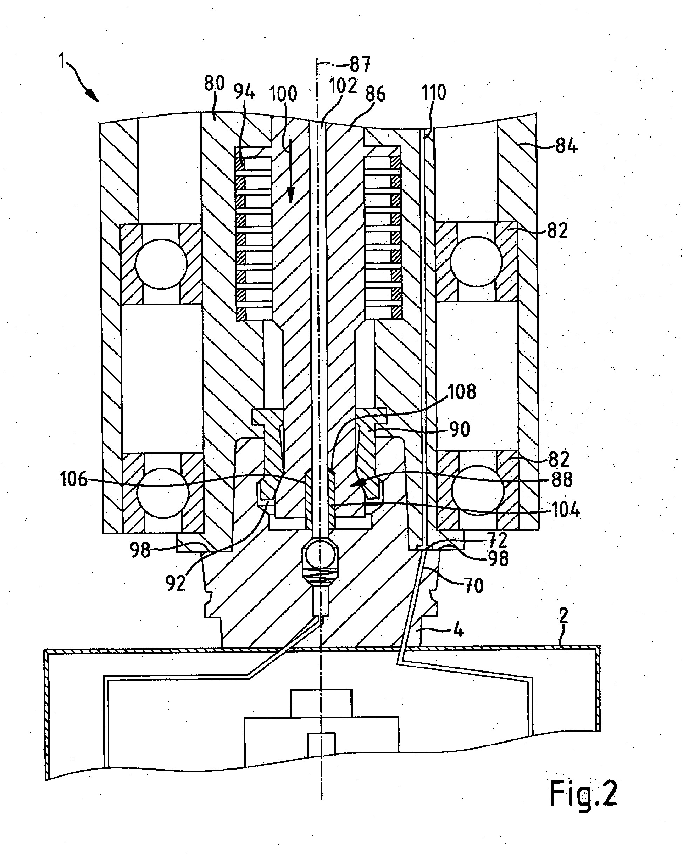

Die Fig. 2 zeigt einen Abschnitt des Werkzeugkopfs 1 an einer Maschinenspindel 80 einer Werkzeugmaschine. Die Maschinenspindel 80 ist mit Drehlagern 82 in einem Spindelgehäuse 84 der Werkzeugmaschine aufgenommen. Der Schaft 4 des Werkzeugkopfs 1 ist ein Hohlschaft. Der Werkzeugkopf 1 ist an der Maschinenspindel 80 unter Bildung einer Radial- und Planflächenverspannung mit einem Spannmechanismus in einer HSK-Schnittstelle gehalten, der über eine Zugstange betätigbar ist.

In der Maschinenspindel 80 ist eine Lanze 86 aufgenommen. Die Lanze 86 ist in der Maschinenspindel 80 koaxial zu der Spindeldrehachse 87 angeordnet. Die Lanze 86 ist in die Werkzeugspannvorrichtung integriert. Sie hat einen als Klemmkörper wirkenden Abschnitt 88. Bei dem Abschnitt 88 befindet sich eine Spannzange 90. Der Abschnitt 88 ragt mit der Spannzange 90 in die Ausnehmung 92 des Schafts 4 an dem Werkzeugkopf 1.

Die Maschinenspindel 80 enthält ein Tellerfederpaket 94. Mit dem Tellerfederpaket 94 wird die Lanze 86 in der Maschinenspindel 80 gegen den Abschnitt 96 in der Maschinenspindel 80 gedrückt. Hierdurch zieht die Lanze 86 mit dem als Klemmkörper wirkenden Abschnitt 88 und der Spannzange 90 den Schaft 4 an die Maschinenspindel 80, so dass der Werkzeugkopf 1 mit seinem Schaft 4 an der Stirnfläche 98 der Maschinenspindel kraftschlüssig anliegt. Die Lanze 86 kann mit einer nicht weiter gezeigten Hydraulikeinrichtung in der Richtung des Pfeils 100 mit Kraft beaufschlagt werden. Die Lanze 86 wird hierdurch in die Ausnehmung 92 des Schafts 4 an dem Werkzeugkopf 1 bewegt. Hierdurch löst sich der Kraftschluss des Schafts 4 und der Maschinenspindel 80, so dass der Werkzeugkopf 1 freigegeben wird.

Die Lanze 86 hat einen Kanal 102 für das Zuführen von Kühlschmierstoff in den Werkzeugkopf 1. Für die Übergabe von Kühlschmierstoff aus der Lanze 86 in den Werkzeugkopf 1 ist in der Ausnehmung 92 des Schafts 4 des Werkzeugkopfs 1 ein männliches Adapterstück 104 ausgebildet, das bei Anschluss des Werkzeugkopfs 1 an die Maschinenspindel 80 in eine weibliche Aufnahme 106 an der Lanze 86 ragt. An dem zu der Lanze 86 weisenden Abschnitt des Adapterstücks 104 ist ein Dichtelement 108 angeordnet. Das Dichtelement 108 gewährleistet, dass auch bei hohen Drehzahlen der Maschinenspindel 80 der Kühlschmierstoff aus dem Kanal 102 in den Werkzeugkopf 1 geführt wird.

Die Maschinenspindel 80 enthält einen Kanal 110 für das Zuführen von Druckluft in den Werkzeugkopf 1. Wenn der Werkzeugkopf 1 an die Maschinenspindel 80 angeschlossen ist, liegt die Schnittstelle 72 des Leitungssystems 70 für Druckluft in dem Werkzeugkopf 1 an dem Kanal 110 in der Maschinenspindel 80.

Die Mischkammer 44 in der Düseneinrichtung 42 hat eine Düsenöffnung 112. Die Düsenöffnung 112 kann mittels eines beweglichen Schließkörpers 114 freigegeben und gesperrt werden. Die Position des Schließkörpers 114 in der Düseneinrichtung 42 wird mit Druckluft eingestellt, die der Düseneinrichtung 42 über einen Steuerkanal 116 zugeführt wird. In der Düseneinrichtung 42 kann der Schließkörper 114 entsprechend dem Doppelpfeil 115 parallel zu der Achse 7 des Werkzeugkopfes 1 verlagert werden.

An dem Schieber 6 des Werkzeugkopfs 1 gibt es einen Aerosolkanal. Wenn die Düsenöffnung 112 der Düseneinrichtung 42 freigegeben ist, wird das in der Mischkammer 44 erzeugte Kühlschmierstoff-Aerosol 38 durch den Aerosolkanal zu den Schneidkanten 40 des Schneidwerkzeugs 10 geführt.

Der Steuerkanal 116 ist über ein Drucksteuerventil 118 mit der Druckluftleitung 76 verbunden. Über das Drucksteuerventil 84' wird der Steuerkanal 116 mit Druckluft aus der Druckluftleitung 76 versorgt. Dabei bewirkt das Drucksteuerventil 118, dass die Differenz $\Delta P$ des pneumatischen Drucks $P_{76}$ in der Druckluftleitung 76 und des pneumatischen Drucks $P_{116}$ in dem Steuerkanal 116 stets den gleichen Wert hat.

In dem Schieber 6 des Werkzeugkopfs 1 gibt es eine Leitung 120. Die Leitung 120 verbindet die Mischkammer 44 mit der Leitung 66. In der Leitung 66 ist ein mit Druckluft gesteuertes Absperrventil 122 angeordnet.

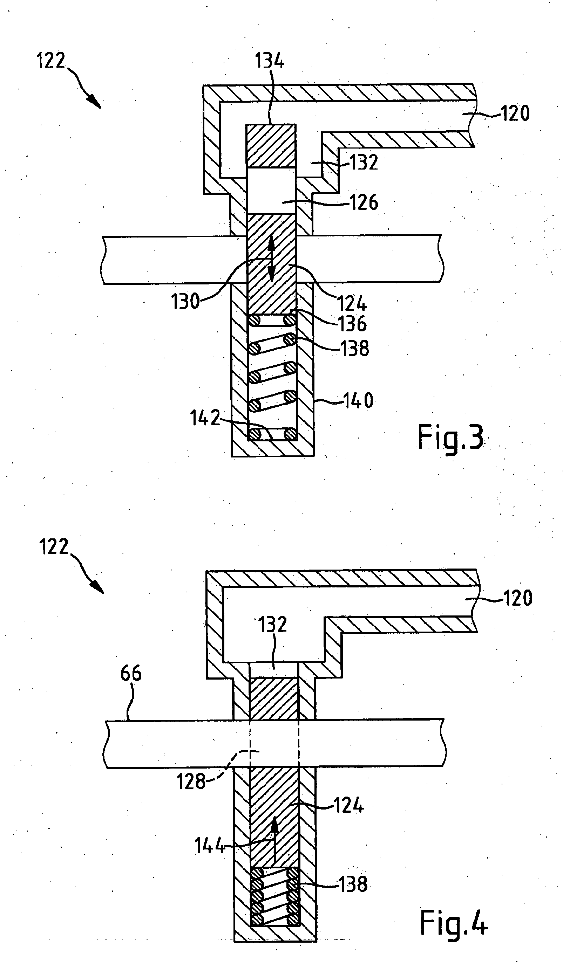

Die Fig. 3 zeigt das Absperrventil 122 in einer Schließstellung, bei der die Leitung 66 gesperrt ist. In der Fig. 4 ist das Absperrventil 122 in einer Offenstellung gezeigt, in der die Leitung 66 freigegeben ist. In der Offenstellung kann das Öl aus der Leitung 66 in die Mischkammer 44 der Düseneinrichtung 42 gelangen.

Das Absperrventil 122 enthält ein linearbewegliches Schließelement 124 mit einer Öffnung 126. Das Absperrventil 122 hat eine Ventilkammer 128, die durch Bewegen des Schließelements 124 entsprechend dem Doppelpfeil 130 freigegeben und gesperrt werden kann. Das Absperrventil 122 hat eine Steuerkammer 132 für Druckluft, die über die Leitung 120 mit der Druckluftleitung 76 verbunden ist. Das Schließelement 124 hat einen zylindrischen Abschnitt 134, der in der Steuerkammer 132 geführt ist. Der dem zylindrischen Abschnitt 134 gegenüberliegende Abschnitt 136 des Schließelements 124 ist mit der Kraft einer Feder 138 beaufschlagt, die an einem in dem Ventilkörper 140 des Absperrventils 122 ausgebildeten Federsitz 142 abgestützt ist und die das Schließelement 124 mit einer entsprechend dem Pfeil 144 wirkenden Kraft beaufschlagt, die das Schließelement 124 in den zylindrischen Abschnitt 134 drückt.

Wenn der pneumatische Druck $P_{76}$ in der Druckluftleitung 76 einen charakteristischen Schwellwert übersteigt, wird das Schließelement 124 in der Richtung des Doppelpfeils 130 gegen die Kraft der Feder 138 derart verlagert, dass die Ventilkammer 128 freigegeben ist. Das über die Leitung 66 bereitgestellte Öl kann dann zu der Düseneinrichtung 42 gelangen. Wenn der pneumatische Druck $P_{76}$ in der Druckluftleitung 76 dagegen zusammenbricht, bewegt die Kraft der Feder 138 den zylindrischen Abschnitt 134 des Schließelements 124 in die Steuerkammer 132. Die Ventilkammer 128 ist dann gesperrt.

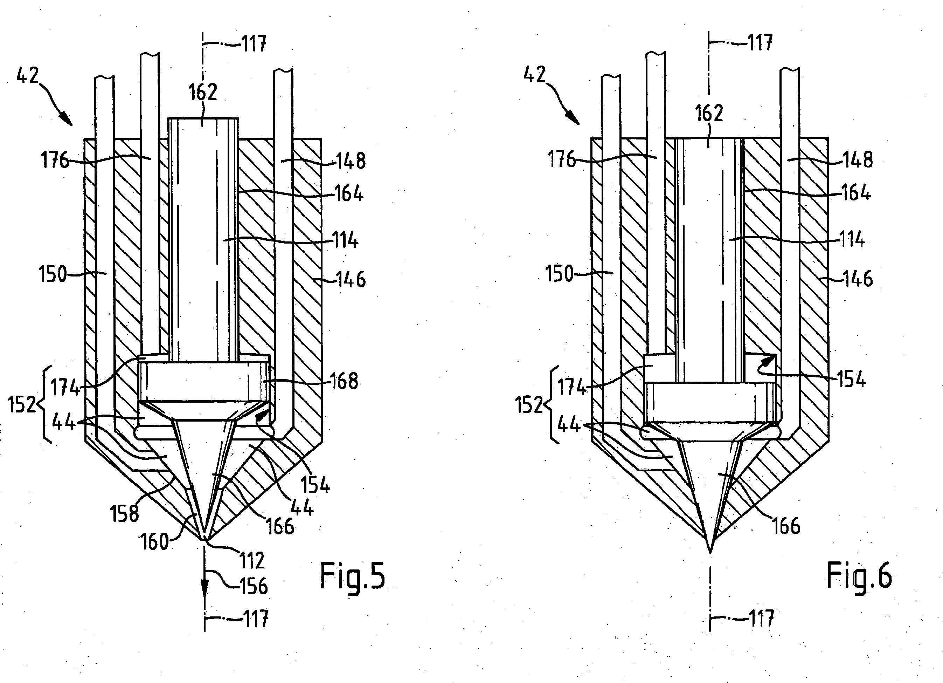

Die Fig. 5 zeigt die Düseneinrichtung 42 in einer Einstellung des Schließkörpers 114, bei der die Düsenöffnung 112 freigegeben ist. Die Düseneinrichtung 42 hat einen Düsenkörper 146. In der Wandung des Düsenkörpers 146 ist ein Fluidkanal 148 ausgebildet, durch den Druckluft aus der Leitung 76 in die Mischkammer 44 zugeführt werden kann. Das Öl aus der Leitung 66 wird durch einen Fluidkanal 150 in die Mischkammer 44 der Düseneinrichtung 42 geleitet.

Der Düsenkörper 146 hat einen Hohlraum 152, der einen Abschnitt hat, der als Mischkammer 44 wirkt. Der Hohlraum 152 ist durch einen ersten Wandungsabschnitt 154 begrenzt, der eine Zylinderform aufweist. Dieser Wandungsabschnitt 154 ist in der Richtung des Pfeils 156 in zwei aufeinanderfolgenden Wandungsabschhitten 158, 160 mit einer ansteigenden Wandungsneigung trichterförmig, d.h. konisch verjüngt.

Der Schließkörper 114 hat einen Schaft 162. Mit dem Schaft 162 ist der Schließkörper 114 in einer Bohrung 164 in dem Düsenkörper 146 geführt. Der Schließkörper 114 ist mit einem konisch geformten Abschnitt 166 ausgebildet, der zu dem Wandungsabschnitt 160 der Mischkammer 44 eine Passform hat. So ist die Düsenöffnung 112 gesperrt, wenn der Abschnitt 166 des Schließkörpers 114 an dem Wandungsabschnitt 166 der Mischkammer 44 anliegt.

Der Schließkörper 114 ist rotationssymmetrisch zu der Achse 117, die zu der Achse 7 des Werkzeugkopfs 1 parallel ist. Der Schließkörper hat einen zylindrischen Abschnitt 168, der an den Durchmesser des Wandungsabschnitts 154 des Hohlraums 152 angepasst ist. Der zylindrische Abschnitt 168 des Schließkörpers 114 hat eine konische Mantelfläche 172. Die konische Mantelfläche 172 und der Abschnitt 168 des Schließkörpers 114 begrenzen die Mischkammer 44 der Düseneinrichtung 42 in einem rückwärtigen Bereich, welcher von der Düsenöffnung 112 abgewandt ist.

Über den zylindrischen Abschnitt 168 des Schließkörpers 114 wird der als Mischkammer 44 wirkende Abschnitt des Hohlraums 152 von einem im Bezug auf die Düsenöffnung 112 rückwärtig angeordneten Abschnitt 174 getrennt. In diesen Abschnitt 174 mündet ein Fluidkanal 176, der an die Steuerleitung 116 angeschlossen ist. Der Abschnitt 174 des Hohlraums 152 dient als Steuerkammer. Wenn der pneumatische Druck $P_{116}$ in dem Abschnitt 174 größer ist als der Druck $P_{44}$ in der Mischkammer 44, wird der Schließkörper 114 in der Richtung des Pfeils 156 bewegt. Die Düsenöffnung 112 ist dann, wie in der Fig. 6 gezeigt, mittels des Schließkörpers 114 versperrt.

Ist der pneumatische Druck $P_{82}$ in dem Abschnitt 174 jedoch kleiner als der Druck $P_{44}$ in der Mischkammer 44, wird der Schließkörper 114 in der Düseneinrichtung 42 in die in der Fig. 5 gezeigte Öffnungsstellung bewegt.

Wenn über den Kanal 148 Druckluft mit einem hohen Druck $P_{76}$ im Bereich von 30 Bar bereitgestellt wird, strömt die Druckluft mit großer Strömungsgeschwindigkeit in die Mischkammer 44. Der sich verjüngende Querschnitt der Mischkammer 44 führt zu dem sogenannten Venturi-Effekt: Zu der Öffnung 112 hin nimmt der Druck in der Mischkammer 44 mit großem Gradient sehr stark ab. Kühlschmierstoff, der über den Kanal 190 der Mischkammer 44 zugeführt wird, wird hierdurch angesaugt. Aufgrund des Druckgradients wird der Kühlschmierstoff in der Mischkammer 44 mit der Druckluft vermischt und sehr fein zerstäubt, so dass durch die Öffnung 112 der Düseneinrichtüng 42 ein Aerosol abgegeben wird.

Eine hohe Strömungsgeschwindigkeit von Luft in der Mischkammer 44 führt allerdings dazu, dass der Druck $P_{44}$ in der Mischkammer 44 kleiner ist als der Druck $P_{76}$ in der Druckluftleitung 76. Wenn der Druck $P_{44}$ in der Mischkammer

44 den pneumatischen Druck $P_{116}$ in dem Abschnitt 174 des Hohlraums 190 in dem Düsenkörper 146 unterschreitet, wird der Schließkörpers 114 in die Mischkammer 44 hinein gezogen. Die Öffnung 112 der Düseneinrichtung 42 wird dann durch den Schließkörper 114 versperrt.

Für das Erzeugen von Aerosol mit der Düseneinrichtung 42 ist es erforderlich, dass der pneumatische Druck $P_{76}$ in der Druckluftleitung 76 etwas größer ist als der pneumatische Druck $P_{116}$ in der Leitung 116. Mit der Düseneinrichtung 42 lässt sich ein besonders fein zerstäubtes Aerosol erzeugen, wenn der Druck $P_{116}$ in der Leitung 116 und der Druck $P_{76}$ in der Drucklüftleitung 76 der folgenden Beziehung genügt:

$$P_{76} > P_{116} > P_{44}^{min},$$

wobei $P_{44}^{min}$ der dynamische Druck in der Mischkammer 44 ist, wenn der Schließkörper 114 in der Öffnungsstellung positioniert ist.

Bei einem Betrieb der Düseneinrichtung 42 mit einem Druck $P_{76}$ in der Druckluftleitung 76 und einem Druck in der Leitung 116, welcher der vorgenannten Beziehung genügt, wird die Düseneinrichtung 42 nämlich fortlaufend geöffnet und geschlossen. Indem dabei der Quotient

$$Q: = P_{76} / P_{116}$$

variiert wird, kann der Betrag des aus der Öffnung 112 der Düseneinrichtung 42 pro Zeiteinheit austretenden Aerosolstroms $I_A$, d.h., die mit der Düseneinrichtung 42 bereitgestellte Aerosolmenge, eingestellt werden. Alternativ öder zusätzlich hierzu ist es grundsätzlich auch möglich, die Düseneinrichtung 42 so auszubilden, dass der Hub der Bewegung des Schließkörpers 114 eingestellt werden kann. Durch ein Variieren des Hubs des Schließkörpers 114 kann die mit der Düseneinrichtung 42 bereitgestellte Aerosolmenge und die Zusammensetzung des Aerosols verändert werden.

Das Drucksteuerventil 118 in der Steuerleitung 116 ist so eingestellt, dass der Druck $P_{116}$ in der Steuerleitung 116 der folgenden Beziehung genügt:

$$P_{116} = P_{76} - \Delta P > P_{44}^{min}$$

Hierzu hat das Drucksteuerventil 118 einen Ventilkörper 178, in dem ein torpedoförmiger Schließkörper 180 entsprechend dem Doppelpfeil 182 gegen die Kraft einer Druckfeder 184 bewegt werden kann.

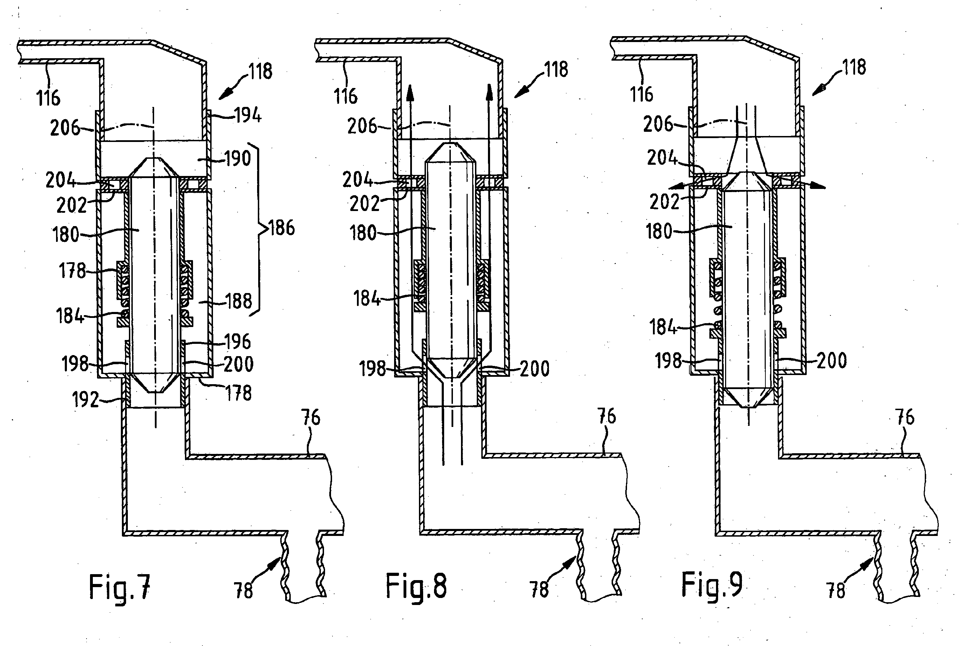

Das Drucksteuerventil 118 ist in den Fig. 7, 8 und 9 in unterschiedlichen Einstellungen gezeigt. Das Drucksteuerventil hat eine Ventilkammer 186 mit einem Kammerabschnitt 188 und einem Kammerabschnitt 190. Der Schließkörper 180 ist an die Druckfeder 184 angeschlossen. Die Druckfeder 184 ist an dem Ventilkörper 178 abgestützt. Das Drucksteuerventil 118 hat ein erstes Anschlussstück 192. Mit dem ersten Anschlussstück 192 ist das Drucksteuerventil 118 an die Druckluftleitung 76 angeschlossen. Das Drucksteuerventil 118 hat ein zweites Anschlussstück 194. Über das zweite Anschlussstück 194 ist das Drucksteuerventil 118 mit der als Steuerleitung wirkenden Leitung 116 verbunden.

Das erste Anschlussstück 192 ragt mit einem rohrförmigen Abschnitt 196 in den Kammerabschnitt 188 der Ventilkammer 186. Der bewegliche Schließkörper 180 ist in dem rohrförmigen Abschnitt 196 geführt. Der rohrförmige Abschnitt 196 ist mit mehreren Durchtrittsöffnungen 198, 200 für Druckluft ausgebildet. Durch Verlagern des Schließkörpers 180 können die Durchtrittsöffnungen 198, 200 für Druckluft freigegeben und gesperrt werden.

Der Kammerabschnitt 188 der Ventilkammer 186 ist von dem Kammerabschnitt 190 durch ein Ringelement 202 abgetrennt. In dem Ringelement 202 sind mehrere Strömungswege 204 ausgebildet, über die Druckluft aus dem Kammerabschnitt 190 aus der Ventilkammer ins Freie geführt werden kann, wenn der Schließkörper 180 das Ringelement 202 freigibt.

In der in Fig. 7 gezeigten Einstellung des Drucksteuerventils 118 wird der Schließkörper 180 durch die Kraft der Ringfeder 184 und unterstützt durch die mit dem Druck $P_{116}$ in der Leitung 116 auf den Schließkörper 180 ausgeübte Druckkraft gegen die in der Leitung 76 auf den Schließkörper 180 lastende Druckkraft in dem Anschlussstück 192 gehalten. Der Durchtritt von Druckluft aus der Druckluftleitung 76 in die Steuerleitung 116 wird hier gesperrt.

Die Fig. 8 zeigt das Drucksteuerventil 118 in einer Einstellung, in welcher der Schließkörper 180 die Durchtrittsöffnungen 198, 200 in dem rohrförmigen Abschnitt 188 der Ventilkammer 186 so freigibt, dass Druckluft entsprechend den Pfeilen aus der Druckluftleitung 76 in die Steuerleitung 116 einströmen kann. Dies führt dazu, dass der Druck $P_{116}$

in der Leitung 116 ansteigt.

Die Fig. 9 zeigt das Drucksteuerventil 118 in einer Einstellung, bei welcher der Schießkörper 180 durch die mit dem Druck $P_{116}$ in der Leitung 116 hervorgerufene Druckkraft und die Kraft der Feder 184 in eine Position bewegt ist, die einen Durchtritt von Druckluft aus der Leitung 76 in die Leitung 116 unterbindet. So gelangt die Luft aus der Steuerleitung 116 entsprechend den Pfeilen über die Strömungswege 204 des Ringelements 202 ins Freie.

Alternativ hierzu ist es aber auch möglich, das Drucksteuerventil 118 zu der Achse 7 des Werkzeugkopfs derart versetzt anzuordnen, dass die Symmetrieachse 206 des Schließkörpers 180 zu der Achse 7 des Werkzeugkopfs 1 parallel ist. Diese Maßnahme gewährleistet, dass auch bei hohen Drehzahlen des Werkzeugkopfs 1 an der Maschinenspindel einer Werkzeugmaschine der Druckunterschied $\Delta P_{konst.}$ zwischen dem Druck $P_{76}$ in der Leitung 76 für Druckluft und dem Druck $P_{116}$ in der Leitung 116 zuverlässig eingestellt werden kann.

Die Federkonstante K der Druckfeder 184 und die Geometrie des Schließkörpers 180 in dem Drucksteuerventil 118 sind so aufeinander abgestimmt, dass damit eine gleichbleibende Druckdifferenz

$$\Delta P_{konst.} = P_{76} - P_{116} = \frac{K}{A}\, x_s$$

zwischen dem Druck $P_{76}$ in der Druckluftleitung 76 und dem Druck $P_{116}$ in der Steuerleitung 116 eingestellt werden kann, wobei $x_s$ die Auslenkung der Druckfeder 184 aus der Ruheposition ist, wenn der Schließkörper 180 den Durchtritt von Druckluft aus der Druckluftleitung 76 in die Steuerleitung sperrt, und A der Flächeninhalt der zu der Bewegungsachse 206 senkrechten Querschnittsfläche des Schließkörpers 180 ist.

Damit der Schließkörper 180 auch bei hohen Drehzahlen des Werkzeugkopfs 1 an der Maschinenspindel einer Werkzeugmaschine nur geringen Reibungskräften ausgesetzt ist, besteht der Ventilkörper 178 bevorzugt aus Edelstahl und es sind die Abschnitte des Schließkörpers 180, die in dem Ventilkörper 178 geführt sind, mit Teflon beschichtet. Alternativ hierzu ist es auch möglich, den Schließkörper 180 in Edelstahl auszuführen und in dem Ventilkörper 178 entsprechende mit Teflon beschichtete Abschnitte vorzusehen.

Der torpedoförmige Schließkörper 180 hat eine Symmetrieachse 206. Zu der Symmetrieachse 206 ist der torpedoförmige Schließkörper 180 rotationssymmetrisch. Die Symmetrieachse 206 ist auch die Bewegungsachse für die Linearbewegung des Schließkörpers 180. Die Symmetrieachse 206 des Schließkörpers 180 fluchtet mit der Achse 7 des Werkzeugkopfs 1.

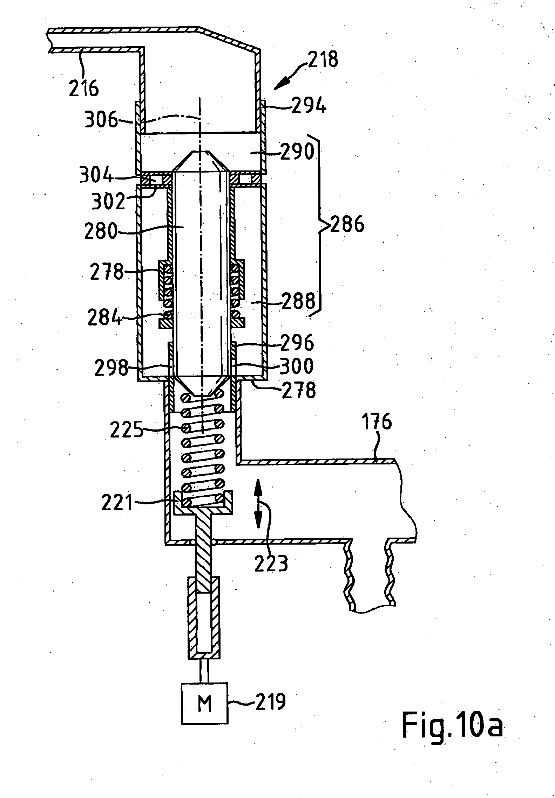

Die Fig. 10a zeigt ein weiteres Drucksteuerventil 218 für den Einsatz in dem Werkzeugkopf 1 aus Fig. 1. Baugruppen des Drucksteuerventils 218, die mit Baugruppen des anhand der Fig. 7, 8 und 9 beschriebenen Drucksteuerventils 118 identisch sind, haben in der Fig. 10a im Vergleich zu den Fig. 7, 8 und 9 um die Zahl 100 erhöhte Bezugszahlen.

Das Drucksteuerventil 218 enthält einen Stellmotor 219. Mit dem Stellmotor 219 kann durch Verlagern einer Abstützeinheit 221 entsprechend dem Doppelpfeil 223 die Vorspannung eines Federelements 225 eingestellt werden. Das Federelement 225 beaufschlagt den Schließkörper 280 mit einer zusätzlichen Federkraft. Aufgrund der Einstellbarkeit der Vorspannung des Federelements 225 ist diese zusätzliche Federkraft variabel. Das Drucksteuerventil 218 ermöglicht damit durch entsprechendes Ansteuern des Stellmotors 219 ein Variieren des Druckunterschieds $\Delta P_{konst}$ für den Druck $P_{176}$ in der Druckluftleitung 176 und für den Druck $P_{216}$ in der Leitung 216.

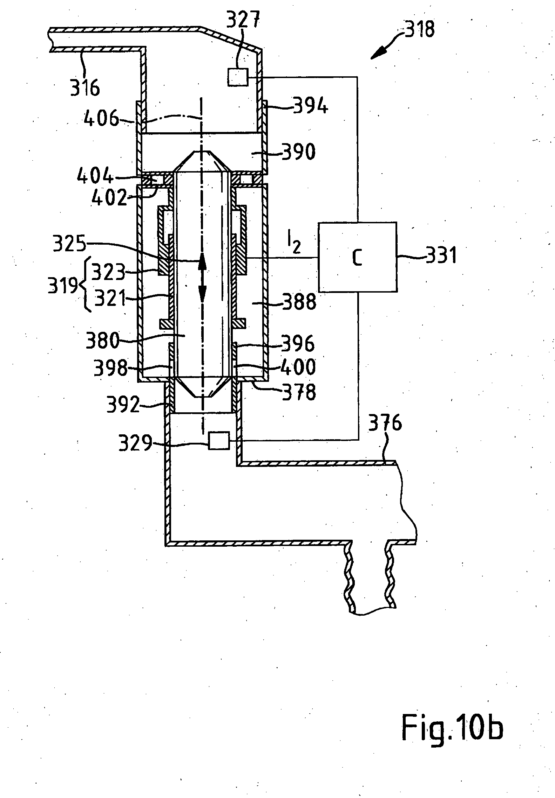

Die Fig. 10b zeigt ein weiteres Drucksteuerventil 318 für den Einsatz in dem Werkzeugkopf 1 aus Fig. 1. Baugruppen des Drucksteuerventils 318, die mit Baugruppen des anhand der Fig. 7, 8 und 9 beschriebenen Drucksteuerventils 118 identisch sind, haben in der Fig. 10b im Vergleich zu den Fig. 7, 8 und 9 um die Zahl 200 erhöhte Bezugszahlen.

Das Drucksteuerventil 318 enthält einen Linearmotor 319 für das Bewegen des Schließkörpers 380. Der Linearmotor 319 hat einen Rotor 321 und einen Stator 323. Der Schließkörper 380 des Drucksteuerventils 318 ist an dem Rotor 321 festgelegt. Der Stator 323 des Linearmotors 319 ist an dem Drucksteuerventil 318 abgestützt. Durch Bestromen des Stators 323 kann der Schließkörper 380 entsprechend dem Doppelpfeil 325 verlagert werden.

In dem Drucksteuerventil 318 gibt es einen Drucksensor 327 und einen Drucksensor 329. Mit dem Drucksensor 327 kann der pneumatische Druck $P_{276}$ in der Leitung 276 elektronisch erfasst werden. Der Drucksensor 329 ist in der Leitung 316 angeordnet. Der Drucksensor 329 misst den Druck $P_{316}$ in der Leitung 316 elektronisch.

Das Drucksteuerventil 318 hat einen Controller 331. Der Controller 331 steuert den Strom $I_L$, der dem Linearmotor 319 zugeführt wird, aufgrund der Signale des Drucksensors 327 und des Drucksensors 329. Hierzu enthält der Controller 331 ein Regelprogramm, das die Druckdifferenz $\Delta P$ zwischen dem Druck $P_{276}$ in der Leitung 276 und dem Druck $P_{316}$ in der Leitung 316 auf einen einstellbaren, konstanten Wert $\Delta P_{konst}$ zu regeln vermag. Das Drucksteuerventil 318 ermöglicht damit in einem Werkzeugkopf mit Zerstäubersystem, wie er in der Fig. 1 gezeigt ist, das Einstellen des Betrags des Aerosolstroms $I_A$, der mit der Düseneinrichtung 42 bereitgestellt werden kann.

Mit dem Controller 331 ist es insbesondere möglich, den mit der Düseneinrichtung 42 bereitgestellten Aerosolstrom $I_A$ in Abhängigkeit einer momentanen Drehzahl des Werkzeugkopfs einzustellen oder auch zu regeln. Darüber hinaus ermöglichen es der Linearmotor 319 und der Controller 331, dass der Schließkörper 380 des Drucksteuerventils 318 in einem Werkzeugkopf nicht unbedingt parallel zur Werkzeugkopfachse ausgerichtet sein muss, da an dem Schließkörper 380 angreifenden Fliehkräfte mit dem Linearmotor 319 kompensiert werden können.

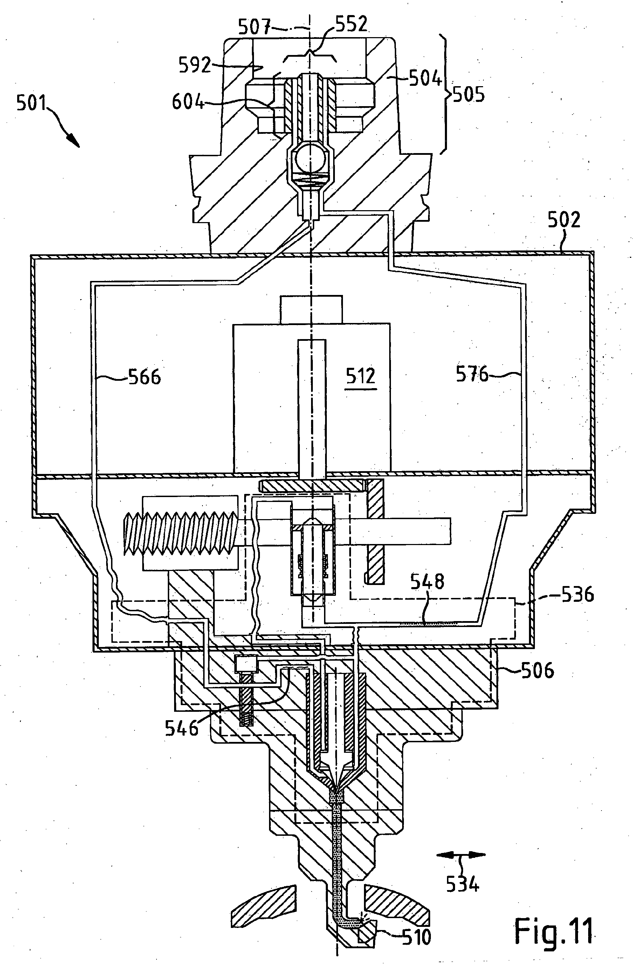

Der Werkzeugkopf 501 in Fig. 11 hat einen Aufbau, der dem Aufbau des Werkzeugkopfs 1 in Fig. 1 weitgehend entspricht. Baugruppen in dem Werkzeugkopf 501, die mit Baugruppen aus dem Werkzeugkopf 1 identisch sind, haben in der Fig. 11 im Vergleich zu der Fig. 1 um die Zahl 500 erhöhte Bezugszahlen.

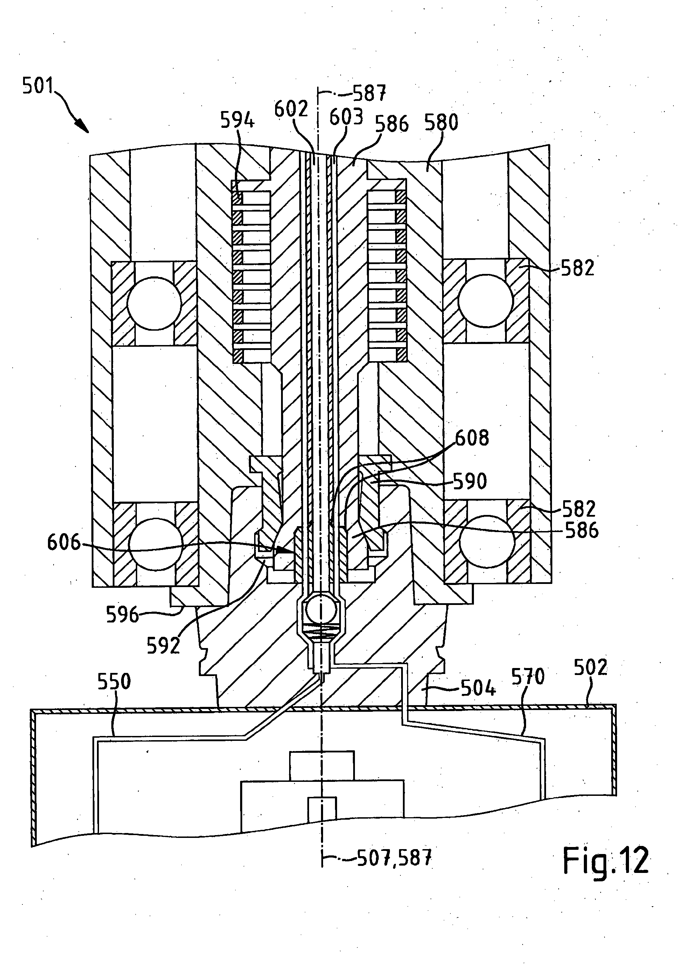

Anders als bei dem Werkzeugkopf 1 in Fig. 1 hat der Werkzeugkopf 501 in der Ausnehmung 592 des Schafts 504 ein männliches Adapterstück 604 mit einer Schnittstelle, an der Druckluft und Kühlschmierstoff aus einer Lanze in der Maschinenspindel einer Werkzeugmaschine übergeben werden kann. Die Fig. 12 zeigt den Werkzeugkopf 501 an einer Maschinenspindel 580 einer Werkzeugmaschine. Auch der Schaft 504 des Werkzeugkopfs 501 ist ein Hohlschaft. Der Werkzeugkopf 501 ist an der Maschinenspindel 580 mit einer HSK-Schnittstelle gehalten.

Die Maschinenspindel 580 ist mit Drehlagern 582 in einem Spindelgehäuse 584 der Werkzeugmaschine aufgenommen. In der Maschinenspindel 580 ist eine Lanze 586 geführt. Die Lanze 586 ist in der Maschinenspindel 580 koaxial zu der Spindeldrehachse 587 angeordnet. Die Lanze 586 hat einen als Klemmkörper wirkenden Abschnitt 588. Bei dem als Klemmkörper wirkenden Abschnitt 588 befindet sich eine Spannzange 590. Der Abschnitt 588 ragt mit der Spannzange 590 in die Ausnehmung 592 des Schafts 504 an dem Werkzeugkopf 501.

Auch die Maschinenspindel 580 enthält ein Tellerfederpaket 594. Mit dem Tellerfederpaket 594 wird die Lanze 586 in der Maschinenspindel 580 gegen den Abschnitt 596 in der Maschinenspindel 580 gedrückt.

Die Lanze 586 hat einen Kanal 602 für das Zuführen von Kühlschmierstoff in den Werkzeugkopf 501 und einen Kanal 604 für Druckluft, der zu dem Kanal 602 koaxial ist. Für die Übergabe von Kühlschmierstoff aus der Lanze 586 in den Werkzeugkopf 1 ist in der Ausnehmung 592 des Schafts 4 des Werkzeugkopfs 1 ein männliches Adapterstück 604 ausgebildet, das bei Anschluss des Werkzeugkopfs 1 an die Maschinenspindel 580 in eine weibliche Aufnahme 606 an der Lanze 586 ragt.

An dem zu der Lanze 586 weisenden Abschnitt des Adapterstücks 606 ist ein Dichtelement 608 angeordnet, das auch bei hohen Drehzahlen der Maschinenspindel 688 gewährleistet, dass der Kühlschmierstoff aus dem Kanal 602 und die Druckluft aus dem Kanal 604 ohne Verluste in den Werkzeugkopf 501 geführt wird. Bei dem Anschluss des Werkzeugkopfs 501 an die Maschinenspindel 580 wird sowohl das Leitungssystem 570 für Druckluft in dem Werkzeugkopf 501 als auch das Leitungssystem 550 für Kühlschmierstoff in dem Werkzeugkopf mit den koaxial zur Drehachse 587 der Maschinenspindel in der Lanze 586 verlaufenden Kanälen für Druckluft und Kühlschmierstoff verbunden.

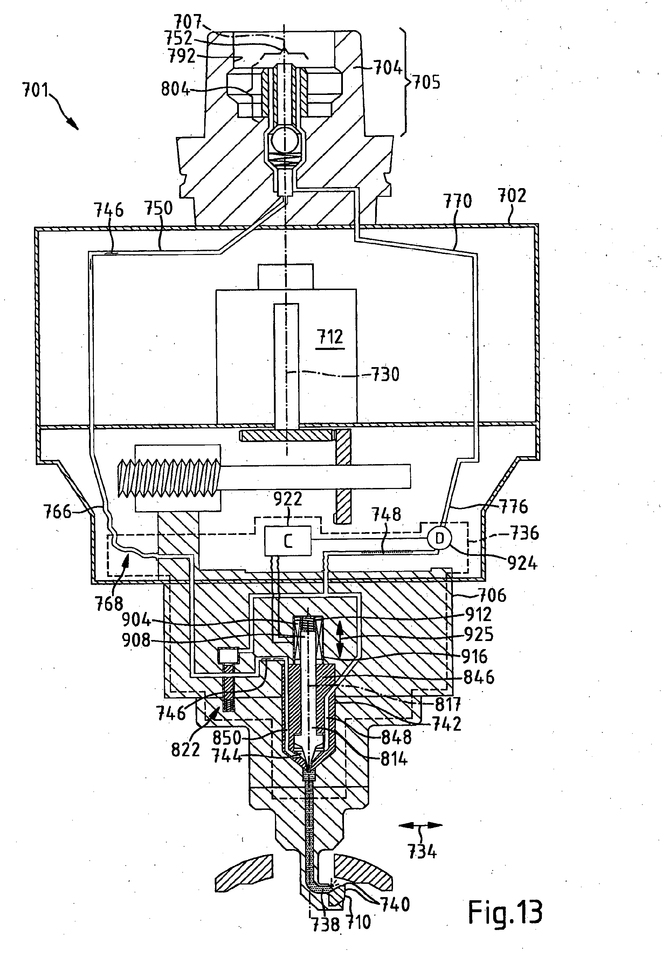

Der Werkzeugkopf 701 in Fig. 13 hat einen Aufbau, der dem Aufbau des Werkzeugkopfs 1 in Fig. 1 weitgehend entspricht. Baugruppen in dem Werkzeugkopf 701, die Baugruppen aus dem Werkzeugkopf 1 funktional entsprechen, haben in der Fig. 13 im Vergleich zu der Fig. 1 um die Zahl 700 erhöhte Bezugszahlen.

Wie der Werkzeugkopf 501 in Fig. 11 hat der Werkzeugkopf 701 in der Ausnehmung 792 des Schafts 704 ein männliches Adapterstück 804, über das Druckluft und Kühlschmierstoff aus einer Lanze in der Maschinenspindel einer Werkzeugmaschine übergeben werden kann.

In dem Werkzeugkopf 701 gibt es ein Zerstäubersystem 736 für das Bereitstellen von Kühlschmierstoff-Aerosol 738 an den wirksamen Schneidkanten 740 des Schneidwerkzeugs 710. Das Zerstäubersystem 736 enthält eine Düseneinrichtung 742, mit der Kühlschmierstoff-Aerosol 738 erzeugt werden kann. Die Düseneinrichtung 742 hat eine Mischkammer 744. In der Mischkammer 744 kann Kühlschmierstoff 746, etwa in Form von Öl, das der Mischkammer 744 zugeführt wird, mit Druckluft 748, die in die Mischkammer 744 geleitet wird, zu Kühlschmierstoff-Aerosol 738 vermischt werden. Für das Zuführen von Kühlschmierstoff 746 in die Mischkammer 744 der Düseneinrichtung 742 enthält der Werkzeugkopf 701 ein Leitungssystem 750 für Kühlschmierstoff.

Die Düseneinrichtung 742 hat einen Düsenkörper 846. In der Wandung des Düsenkörpers 846 ist ein Fluidkanal 848 ausgebildet, durch den Druckluft aus der Leitung 776 in die Mischkammer 744 zugeführt werden kann. Das Öl aus der Leitung 766 wird durch einen Fluidkanal 850 in die Mischkammer 744 der Düseneinrichtung 742 geleitet.

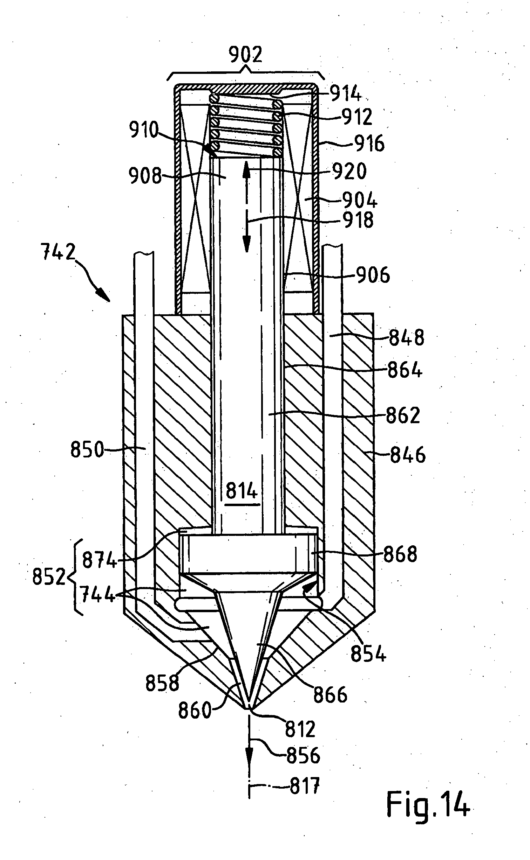

Die Fig. 14 zeigt die Düseneinrichtung 742 in einer vergrößerten Ansicht.

Wie der Düsenkörper in dem Werkzeugkopf 1 aus Fig. 1 hat der Düsenkörper 846 einen Hohlraum 852, der einen Abschnitt hat, der als Mischkammer 744 wirkt. Der Hohlraum 852 ist durch einen ersten Wandungsabschnitt 854 begrenzt, der eine Zylinderform aufweist. Dieser Wandungsabschnitt 854 ist in der Richtung des Pfeils 856 in zwei aufeinanderfolgenden Wandungsabschnitten 858, 860 mit einer ansteigenden Wandungsneigung trichterförmig, d.h. konisch verjüngt.

Der Schließkörper 814 hat einen Schaft 862. Mit dem Schaft 862 ist der Schließkörper 814 in einer Bohrung 864 in dem Düsenkörper 846 geführt. Der Schließkörper 814 ist mit einem konisch geformten Abschnitt 866 ausgebildet, der zu dem Wandungsabschnitt 860 der Mischkammer 744 eine Passform hat. So ist die Düsenöffnung 812 gesperrt, wenn der Abschnitt 866 des Schließkörper 814 an dem Wandungsabschnitt 860 der Mischkammer 744 anliegt.

Der Schließkörper 814 ist rotationssymmetrisch zu der Achse 817, die zu der Achse 707 des Werkzeugkopfs 701 parallel ist. Der Schließkörper 814 hat einen zylindrischen Abschnitt 868, der an den Durchmesser des Wandungsabschnitts 854 des Hohlraums 852 angepasst ist. Der Abschnitt 866 des Schließkörpers 814 hat eine konische Mantelfläche. Die konische Mantelfläche und der Abschnitt 868 des Schließkörpers 814 begrenzen die Mischkammer 744 der Düseneinrichtung 742 in einem rückwärtigen Bereich 874, welcher von der Düsenöffnung 812 abgewandt ist.

Für das Bewegen des Schließkörpers 814 gibt es in der Düseneinrichtung 742 einen magnetoelektrischen Antrieb 902. Der magnetoelektrische Antrieb 902 enthält eine Magnetspule 904. Die Magnetspule 904 hat eine Bohrung 906, in der ein rückwärtiger Abschnitt 908 des Schließkörpers 814 aufgenommen ist. Der rückwärtige Abschnitt 908 des Schließkörpers 814 besteht aus einem magnetisierbaren Material, z. B. Eisen. Der Schließkörper 814 hat auf einer der Mischkammer 744 abgewandten Seite eine Stirnfläche 910. An der Stirnfläche 910 ist der Schließkörper 814 mit der Kraft einer Druckfeder 912 beaufschlagt. Die Druckfeder 912 ist in einem Federsitz 914 eines Gehäuses 916 für die Magnetspule 904 abgestützt. Die Kraft der Druckfeder 912 wirkt in der Richtung des Pfeils 918 auf den Schließkörper 814. Sie drückt den Schließkörper 814 gegen den Wandungsabschnitt 860 der Mischkammer 744.

Wenn die Magnetspule 904 erregt wird, wirkt auf den Schließkörper 814 in der Richtung des Pfeils 920 eine Magnetkraft. Diese Magnetkraft ist der Kraft der Druckfeder 912 entgegengesetzt. Durch Erregen der Magnetspule 904 kann der Schließkörper 814 in eine Öffnungsstellung bewegt werden, in der die Düsenöffnung 812 freigegeben ist.

Um die Position des Schließkörpers 814 in dem Werkzeugkopf 701 einzustellen, gibt es in dem Zerstäubersystem 736 einen Controller 922. Der Controller 922 enthält eine steuerbare Stromquelle 923. Die Stromquelle 923 ist mit dem Controller 922 verbunden. Mit dem Controller 922 kann die Magnetspule 904 definiert bestromt werden. Der Controller 922 ist mit einem Durchflussmesser 924 verbunden. Mittels des Durchflussmessers 924 kann die Strömung der Druckluft in der Leitung 776 erfasst werden.

Der Controller 922 enthält einen Steuerkreis, mit dem die Position des Schließkörpers 814 in der Düseneinrichtung 742 in Abhängigkeit der erfassten Strömung der Druckluft entsprechend dem Doppelpfeil 925 eingestellt werden kann. Diese Maßnahme ermöglicht, dass der Anteil des Öls in dem mit der Düseneinrichtung 742 erzeugten Aerosol auch bei schwankender Luftströmung in der Druckluftleitung 750 im Wesentlichen konstant gehalten werden kann.

**Bezugszeichenliste**

| | |
|---|---|
| 1, 501, 701 | Werkzeugkopf |
| 2, 502, 702 | Grundkörper |
| 4, 504, 704 | Schaft |
| 5, 505 | Abschnitt (Passzapfen) |
| 6, 506, 706 | Schieber |
| 7, 507, 707 | Werkzeugkopfachse |
| 8 | Werkzeughalter |
| 10, 510, 710 | Schneidwerkzeug |
| 12 | Stellmotor |
| 14 | Antriebswelle |
| 16 | Getriebe |
| 18 | Antriebsritzel |
| 20 | Stirnrad |
| 22 | Spindel |
| 24 | Außengewinde |
| 26 | Verzahnung |
| 28 | Verzahnungsblock |
| 29 | Linearführungselement |
| 30 | Wellenachse |
| 32 | Doppelpfeil |
| 34 | Doppelpfeil |
| 36, 536, 736 | Zerstäubersystem |
| 38, 738 | Kühlschmierstoff-Aerosol |
| 40 | Schneidkanten |
| 42, 742 | Düseneinrichtung |
| 44 | Mischkammer |
| 46 | Kühlschmierstoff |
| 48 | Druckluft (Fluid) |
| 50 | Leitungssystem |
| 52, 72, 552 | Schnittstelle |

| 54 | Ventil |
|---|---|
| 56 | Ventilkammer |
| 58 | Ventilkugel |
| 60 | Ventilfeder |
| 62 | Ventilsitz |
| 64 | Pfeil |
| 65, 66 | Leitung |
| 68 | Leitungsabschnitt |
| 70 | Leitungssystem |
| 74 | Flanschabschnitt |
| 76, 176, 276, 750, 776 | Druckluftleitung (Fluidkanal) |
| 78 | Abschnitt |
| 80, 580 | Maschinenspindel |
| 82 | Drehlager |
| 84' | Drucksteuerventil |
| 84 | Spindelgehäuse |
| 86, 586 | Lanze |
| 87 | Spindeldrehachse |
| 88 | Abschnitt |
| 90 | Spannzange |
| 92 | Ausnehmung |
| 94 | Tellerfederpaket |
| 96 | Abschnitt |
| 98 | Stirnfläche |
| 100 | Pfeil |
| 102, 402, 602, 604 | Kanal |
| 104 | Adapterstück |
| 106 | Aufnahme |
| 108 | Dichtelement |
| 110 | Kanal |
| 112 | Austrittsöffnung |
| 114, 814 | Schließkörper |
| 115 | Doppelpfeil |
| 116, 216, 316 | Steuerkanal |
| 117 | Achse |
| 118 | Drucksteuerventil |
| 120 | Leitung |
| 122 | Absperrventil |
| 126 | Öffnung |
| 128 | Ventilkammer |
| 130 | Doppelpfeil |
| 132 | Steuerkammer |
| 134 | Abschnitt |
| 136 | Abschnitt |
| 138 | Federmittel / Feder |
| 140 | Venitlkörper |
| 142 | Federsitz |
| 144 | Pfeil |
| 146 | Düsenkörper |
| 148, 150 | Fluidkanal |
| 152 | Hohlraum |
| 154 | Wandungsabschnitt |
| 156 | Pfeil |
| 158 | Wandungsabschnitt |
| 160 | Wandungsabschnitt |
| 162 | Schaft |
| 164 | Bohrung |
| 166 | Abschnitt |

| 168 | Abschnitt |
|---|---|
| 172 | Mantelfläche |
| 174 | Abschnitt (Steuerkammer) |
| 178 | Ventilkörper |
| 124, 180, 280, 380 | Schließkörper |
| 182 | Doppelpfeil |
| 184 | Feder (Krafterzeugungsmittel) |
| 284, 319 | Krafterzeugungsmittel |
| 186 | Ventilkammer |
| 188 | Kammerabschnitt |
| 190 | Hohlraum |
| 192 | erstes Anschlussstück |
| 194 | zweites Anschlussstück |
| 196 | Abschnitt |
| 198 | Durchtrittsöffnung |
| 200 | Durchtrittsöffnung |
| 202 | Ringelement |
| 204 | Strömungswege |
| 206 | Bewegungsachse |
| 218 | Drucksteuerventil |
| 219 | Stellmotor |
| 221 | Abstützeinheit |
| 223 | Doppelpfeil |
| 225 | Federelement |
| 284 | Federelement |
| 316 | Leitung |
| 318 | Drucksteuerventil |
| 319 | Linearmotor |
| 321 | Rotor |
| 323 | Stator |
| 325 | Doppelpfeil |
| 327 | Drucksensor |
| 329 | Drucksensor |
| 331 | Controller |
| 550 | Leitungssystem |
| 570 | Leitungssystem |
| 582 | Drehlager |
| 584 | Spindelgehäuse |
| 587 | Spindeldrehachse / Drehachse Lanze |
| 588 | Abschnitt |
| 590 | Spannzange |
| 592 | Ausnehmung |
| 594 | Tellerfederpaket |
| 596 | Abschnitt |
| 604 | Adapterstück |
| 606 | Aufnahme |
| 608 | Dichtelement |
| 688 | Maschinenspindel |
| 740 | Schneidkante |
| 744 | Mischkammer |
| 746 | Kühlschmierstoff |
| 748 | Druckluft |
| 750 | Leitungssystem |
| 766 | Leitung |
| 776 | Leitung |
| 792 | Ausnehmung |
| 804 | Adapterstück |
| 812 | Düsenöffnung |

| 814 | Schließkörper |
|---|---|
| 817 | Achse |
| 846 | Düsenkörper |
| 848 | Fluidkanal |
| 850 | Fluidkanal |
| 852 | Hohlraum |
| 854 | erster Wandungsabschnitt |
| 856 | Pfeil |
| 858 | Wandungsabschnitt |
| 860 | Wandungsabschnitt |
| 862 | Schaft |
| 864 | Bohrung |
| 866 | Abschnitt / Wandungsabschnitt Mantelfläche |
| 868 | Abschnitt |
| 874 | rückwärtiger Bereich |
| 902 | magnetoelektrischer Antrieb |
| 904 | Elektrischer Antrieb (Magnetspule) |
| 906 | Bohrung |
| 908 | rückwärtiger Abschnitt |
| 910 | Stirnfläche |
| 912 | Druckfeder |
| 914 | Federsitz |
| 916 | Gehäuse |
| 918 | Pfeil |
| 920 | Pfeil |
| 922 | Controller (Steuerkreis) |
| 923 | Stromquelle |
| 924 | Durchflussmesser |
| 925 | Doppelpfeil |

**Patentansprüche**

1. Werkzeugkopf (1, 501, 701) mit einer bei Anschluss an eine rotierende Maschinenspindel (80, 580) einer Werkzeugmaschine als Drehachse wirkenden Werkzeugkopfachse (7, 507, 707) und mit einem Grundkörper (2, 502, 702), der einen mit einem Schneidwerkzeug (10, 510, 710) bestückbaren verstellbaren Schieber (6, 506, 706) hält, wobei der Grundkörper (2, 502, 702) ein Zerstäubersystem (36, 536, 736) für das Bereitstellen von Kühlschmierstoff-Aerosol (38, 738) an dem Schneidwerkzeug (10, 510, 710) trägt,
**dadurch gekennzeichnet, dass**
das Zerstäubersystem eine an dem Schieber (6, 506, 706) aufgenommene Düseneinrichtung (42, 742) für das Erzeugen von Kühlschmierstoff-Aerosol (38, 738) enthält, die über eine Leitung (76, 576, 776) für gasförmiges Fluid, insbesondere Druckluft, mit einem eine Verstellbewegung des Schiebers (6, 506, 706) in dem Grundkörper (2, 502, 702) ausgleichenden beweglichen Leitungsabschnitt (68) und über eine Leitung (66, 566, 766) für Kühlschmierstoff mit einem eine Verstellbewegung des Schiebers (6, 506, 706) in dem Grundkörper (2, 502, 702) ausgleichenden beweglichen Leitungsabschnitt (68, 768) mit gasförmigem Fluid (48, 548, 748), insbesondere mit Druckluft, und mit Kühlschmierstoff (46, 546, 746) versorgt werden kann.

2. Werkzeugkopf nach Anspruch 1, **dadurch gekennzeichnet, dass** die Düseneinrichtung (42) eine als Venturidüse wirkenden Mischkammer (44) hat, der gasförmiges Fluid (48) durch einen mit der Leitung (76) für gasförmiges Fluid (48) verbundenen Fluidkanal (148) und der Kühlschmierstoff (46) durch einen mit der Leitung (66) für Kühlschmierstoff verbundenen Fluidkanal (150) zugeführt werden kann.

3. Werkzeugkopf nach Anspruch 2, **dadurch gekennzeichnet, dass** die Düseneinrichtung (42) für das Freigeben und Versperren der Austrittsöffnung (112) der Düseneinrichtung (42) einen parallel zu der Werkzeugkopfachse (7) bewegbaren Schließkörper (114) aufweist.

4. Werkzeugkopf nach Anspruch 3, **dadurch gekennzeichnet, dass** die Größe der Mischkammer (44) durch Bewegen des Schließkörpers (114) verändert werden kann.

**5.** Werkzeugkopf nach Anspruch 4, **dadurch gekennzeichnet, dass** die Düseneinrichtung (42) einen Hohlraum (152) aufweist, den der Schließkörper (114) in die Mischkammer (44) und eine Steuerkammer (174) aufteilt.

**6.** Werkzeugkopf nach einem der Ansprüche 3 bis 5, **dadurch gekennzeichnet, dass** Mittel für das Einstellen des Hubs der Bewegung des Schließkörpers (114) vorgesehen sind.

**7.** Werkzeugkopf nach Anspruch 5 oder 6, **dadurch gekennzeichnet, dass** der Schließkörper (114) aufgrund einer Differenz des Drucks in der Mischkammer (44) und des Drucks in der Steuerkammer (174) in der Richtung des geringeren Drucks verlagert wird.

**8.** Werkzeugkopf nach Anspruch 7, **dadurch gekennzeichnet, dass** die Steuerkammer (174) über ein Differenzdruckventil (118) für das Einstellen des Drucks in der Steuerkammer (174) an die Leitung (76) für gasförmiges Fluid (48) angeschlossen ist.

**9.** Werkzeugkopf nach Anspruch 8, **dadurch gekennzeichnet, dass** das Differenzdruckventil (118) einen beweglichen Schließkörper (180, 280, 380) hat, der in einer ersten Einstellung einen mit der Steuerkammer verbundenen Steuerkanal (116, 216, 316) absperrt, wenn die Druckdifferenz zwischen dem Druck in der Mischkammer (44) und dem Druck in der Steuerkammer (174) einen ersten Schwellwert übersteigt, der in einer von der ersten Einstellung verschiedenen Einstellung die Leitung (76, 176, 276) für gasförmiges Fluid (48) mit dem Steuerkanal (174) für das Bewirken eines Druckausgleichs verbindet, wenn die Druckdifferenz zwischen dem Druck in der Mischkammer (44) und dem Druck in der Steuerkammer (174) einen von dem ersten Schwellwert verschiedenen zweiten Schwellwert übersteigt, der kleiner ist als der erste Schwellwert, und der in einer dritten Einstellung die Steuerkammer (174) belüftet, wenn die Druckdifferenz zwischen dem Druck in der Mischkammer (44) und dem Druck in der Steuerkammer (174) einen von dem ersten Schwellwert verschiedenen dritten Schwellwert unterschreitet, der kleiner ist als der zweite Schwellwert.

**10.** Werkzeugkopf nach Anspruch 9, **dadurch gekennzeichnet, dass** der Schließkörper (180, 280, 380) mit einem Krafterzeugungsmittel (184, 284, 319) in Wirkverbindung steht, das eine an dem Schließkörper (180, 280, 380) angreifende Druckkraft kompensiert.

**11.** Werkzeugkopf nach Anspruch 10, **dadurch gekennzeichnet, dass** das Krafterzeugungsmittel ein Federelement (284) mit einer veränderbaren Vorspannung für das Einstellen der Druckdifferenz zwischen dem Druck in der Mischkammer (44) und dem Druck in der Steuerkammer (174) oder das Krafterzeugungsmittel für das Einstellen des Drucks in der Steuerkammer (174) ein vorzugsweise als Linearmotor (319) ausgebildeter Elektromotor oder ein Piezo-Element ist.

**12.** Werkzeugkopf nach einem der Ansprüche 9 bis 11, **dadurch gekennzeichnet, dass** der Schließkörper (180) in einem Ventilkörper (188) mit einer zu der Werkzeugkopfachse (7) parallelen Bewegungsachse (206) linearbeweglich geführt ist.

**13.** Werkzeugkopf nach Anspruch 12, **dadurch gekennzeichnet, dass** die Bewegungsachse (206) des Ventilkörpers (188) mit der Werkzeugkopfachse (7) fluchtet.

**14.** Werkzeugkopf nach einem der Ansprüche 3 bis 13, **dadurch gekennzeichnet, dass** die Düseneinrichtung (742) einen elektrischen Antrieb (904) für das Bewegen des Schließkörpers (814) aufweist.

**15.** Werkzeugkopf nach Anspruch 14, **dadurch gekennzeichnet, dass** der elektrische Antrieb (904) mit einem Steuerkreis (922) verbunden ist, der die Position des Schließkörpers (814) in Abhängigkeit einer mittels eines in der Leitung (876) für gasförmiges Fluid angeordneten Durchflussmessers (924) erfassten Fluidströmung steuert.

**16.** Werkzeugkopf nach einem der Ansprüche 1 bis 15, **dadurch gekennzeichnet, dass** in der Leitung (65) für Kühlschmierstoff (46) ein mit dem Druck in der Leitung (76) für gasförmiges Fluid (48) gesteuertes Absperrventil (122) angeordnet ist, welches die Zufuhr von Kühlschmierstoff (46) in die Düseneinrichtung (42) unterbindet, wenn der Druck in der Leitung (76) für gasförmiges Fluid (48) einen Schwellwert unterschreitet.

**17.** Werkzeugkopf nach Anspruch 16, **dadurch gekennzeichnet, dass** das Absperrventil (122) einen parallel zu der Werkzeugkopfachse (7) verlagerbaren Schließkörper (124) hat, der in einer ersten Einstellung die Leitung (66) für Kühlschmierstoff (46) sperrt und der in einer von der ersten Einstellung verschiedenen zweiten Einstellung die Leitung (66) für Kühlschmierstoff (46) freigibt.

18. Werkzeugkopf nach Anspruch 17, **dadurch gekennzeichnet, dass** das Absperrventil (122) eine mit der Leitung (76) für gasförmiges Fluid (48) verbundene Steuerkammer (132) hat, um den Schließkörper (124) gegen die Kraft eines Federmittels (138) mit einer Druckkraft zu beaufschlagen, und/oder dass das Absperrventil (122) an dem Schieber (6) aufgenommen ist, und/oder dass der Grundkörper (2) ein Ventil (54) enthält, das die Leitung (66) für Kühlschmierstoff in dem Grundkörper (2) verschließt, wenn der Grundkörper (2) von einer Maschinenspindel (80) getrennt ist, und/oder dass der Grundkörper (2, 502) einen Schaft (4, 504) mit einem als Passzapfen (5, 505) ausgebildeten Abschnitt für den Anschluss an die rotierende Maschinenspindel (80, 580) einer Werkzeugmaschine hat, der eine Schnittstelle (52, 552) für die Übergabe von Kühlschmierstoff aus einem Kanal (102, 602) für Kühlschmierstoff (46) in einer Lanze (86, 586) in der Maschinenspindel (80, 580) einer Werkzeugmaschine hat.

19. Werkzeugkopf nach einem der Ansprüche 1 bis 18, **dadurch gekennzeichnet, dass** der Grundkörper (2, 502) einen Schaft mit einem als Passzapfen (5, 505) ausgebildeten Abschnitt für den Anschluss an die rotierende Maschinenspindel (80, 580) einer Werkzeugmaschine hat, der eine Schnittstelle (72) für die Übergabe von Druckluft aus einem Kanal (102) für Druckluft (48) in der Maschinenspindel (80) einer Werkzeugmaschine hat.

20. Werkzeugkopf nach Anspruch 19, **dadurch gekennzeichnet, dass** die Schnittstelle (552) für die Übergabe von Kühlschmierstoff (46) aus einem Kanal (602) für Kühlschmierstoff in einer Lanze (86) in einer Maschinenspindel (80) einer Werkzeugmaschine auch für die Übergabe von Druckluft (48) aus einem den Kanal (602) für Kühlschmierstoff (46) in der Lanze (86) koaxial umgebenden Kanal (604) für Druckluft (48) ausgelegt ist.

21. Verfahren zum wenigstens teilweisen Beaufschlagen eines Werkstücks mit Aerosol mittels einer Düseneinrichtung (42) in einem Werkzeugkopf (1) gemäß einem der Ansprüche 1 bis 20, bei dem die Größe eines mit der Düseneinrichtung (42) bereitgestellten Aerosolstroms $I_A$ durch Einstellen eines Differenzdrucks ($\Delta$P) zwischen dem Druck ($P_{116}$) in einer mit einer Steuerkammer (174) für einen in der Düseneinrichtung (42) bewegbaren Schließkörper (114) verbundenen Steuerleitung (116) und dem Druck ($P_{76}$) in einer mit einer Mischkammer (44) der Düseneinrichtung (42) verbundenen Druckluftleitung (76) gesteuert wird.

## Claims

1. Tool head (1, 501, 701) having a tool head axis (7, 507, 707) that acts as a rotation axis upon connection to a rotating machine spindle (80, 580) of a machine tool, and having a main body (2, 502, 702) which holds an adjustable slide (6, 506, 706) that is able to be loaded with a cutting tool (10, 510, 710), wherein the main body (2, 502, 702) bears an atomizer system (36, 536, 736) for providing cooling lubricant aerosol (38, 738) to the cutting tool (10, 510, 710), **characterized in that**
   the atomizer system contains a nozzle device (42, 742), received on the slide (6, 506, 706), for producing cooling lubricant aerosol (38, 738), said nozzle device (42, 542, 742) being able to be supplied with gaseous fluid (48, 548, 748), in particular with compressed air, and with cooling lubricant (46, 546, 746) via a line (76, 576, 776) for gaseous fluid, in particular compressed air, having a movable line section (68) that compensates for a displacement movement of the slide (6, 506, 706) in the main body (2, 502, 702), and via a line (66, 566, 766) for cooling lubricant having a movable line section (68, 768) that compensates for a displacement movement of the slide (6, 506, 706) in the main body (2, 502, 702).

2. Tool head according to Claim 1, **characterized in that** the nozzle device (42) has a mixing chamber (44) which acts as a venturi nozzle and to which gaseous fluid (48) can be fed through a fluid duct (148) connected to the line (76) for gaseous fluid (48) and to which cooling lubricant (46) can be fed through a fluid duct (150) connected to the line (66) for cooling lubricant.

3. Tool head according to Claim 2, **characterized in that** the nozzle device (42) has a closing body (114) that is movable parallel to the tool head axis (7) in order to open and close the outlet opening (112) in the nozzle device (42).

4. Tool head according to Claim 3, **characterized in that** the size of the mixing chamber (44) can be varied by moving the closing body (114).

5. Tool head according to Claim 4, **characterized in that** the nozzle device (42) has a cavity (152) which the closing body (114) divides into the mixing chamber (44) and a control chamber (174).

6. Tool head according to one of Claims 3 to 5, **characterized in that** means for setting the stroke of the movement of the closing body (114) are provided.

7. Tool head according to Claim 5 or 6, **characterized in that**, as a result of a difference between the pressure in the mixing chamber (44) and the pressure in the control chamber (174), the closing body (114) is moved in the direction of the lower pressure.

8. Tool head according to Claim 7, **characterized in that** the control chamber (174) is connected to the line (76) for gaseous fluid (48) via a differential pressure valve (118) for setting the pressure in the control chamber (174).

9. Tool head according to Claim 8, **characterized in that** the differential pressure valve (118) has a movable closing body (180, 280, 380) which, in a first setting, closes off a control duct (116, 216, 316) connected to the control chamber when the pressure difference between the pressure in the mixing chamber (44) and the pressure in the control chamber (174) exceeds a first threshold value, which, in a setting different from the first setting, connects the line (76, 176, 276) for gaseous fluid (48) to the control duct (174) in order to effect a pressure balance when the pressure difference between the pressure in the mixing chamber (44) and the pressure in the control chamber (174) exceeds a second threshold value which is different from the first threshold value and is lower than the first threshold value, and which, in a third setting, aerates the control chamber (174) when the pressure difference between the pressure in the mixing chamber (44) and the pressure in the control chamber (174) drops below a third threshold value which is different from the first threshold value and is lower than the second threshold value.

10. Tool head according to Claim 9, **characterized in that** the closing body (180, 280, 380) is operatively connected to a force generating means (184, 284, 319) which compensates a pressure force acting on the closing body (180, 280, 380).

11. Tool head according to Claim 10, **characterized in that** the force generating means is a spring element (284) having a variable pretension for setting the pressure difference between the pressure in the mixing chamber (44) and the pressure in the control chamber (174), or the force generating means is an electric motor preferably in the form of a linear motor (319), or a piezo element for setting the pressure in the control chamber (174).

12. Tool head according to one of Claims 9 to 11, **characterized in that** the closing body (180) is guided in a linearly movable manner in a valve body (188) having a movement axis (206) parallel to the tool head axis (7).

13. Tool head according to Claim 12, **characterized in that** the movement axis (206) of the valve body (188) is aligned with the tool head axis (7).

14. Tool head according to one of Claims 3 to 13, **characterized in that** the nozzle device (742) has an electric drive (904) for moving the closing body (814).

15. Tool head according to Claim 14, **characterized in that** the electric drive (904) is connected to a control circuit (922) which controls the position of the closing body (814) depending on a fluid flow detected by means of a flowmeter (924) arranged in the line (876) for gaseous fluid.

16. Tool head according to one of Claims 1 to 15, **characterized in that** a shut-off valve (122) that is controlled by the pressure in the line (76) for gaseous fluid (48) is arranged in the line (65) for cooling lubricant (46), said shut-off valve (122) preventing cooling lubricant (46) from being fed into the nozzle device (42) when the pressure in the line (76) for gaseous fluid (48) drops below a threshold value.

17. Tool head according to Claim 16, **characterized in that** the shut-off valve (122) has a closing body (124) which is displaceable parallel to the tool head axis (7), which, in a first setting, closes the line (66) for cooling lubricant (46), and which, in a second setting that is different from the first setting, opens the line (66) for cooling lubricant (46).

18. Tool head according to Claim 17, **characterized in that** the shut-off valve (122) has a control chamber (132) connected to the line (76) for gaseous fluid (48), in order to subject the closing body (124) to a pressure force counter to the force of a spring means (138), and/or **in that** the shut-off valve (122) is received on the slide (6), and/or **in that** the main body (2) contains a valve (54) which closes the line (66) for cooling lubricant in the main body (2) when the main body (2) has been separated from a machine spindle (80), and/or **in that** the main body (2, 502) has a shank (4, 504) with a section in the form of a locating pin (5, 505) for connection to the rotating machine spindle (80, 580) of a machine tool, said shank (4, 504) having an interface (52, 552) for transferring cooling lubricant from a duct (102, 602) for cooling lubricant (46) in a lance (86, 586) in the machine spindle (80, 580) of a machine tool.

19. Tool head according to one of Claims 1 to 18, **characterized in that** the main body (2, 502) has a shank with a section in the form of a locating pin (5, 505) for connection to the rotating machine spindle (80, 580) of a machine tool, said shank (4, 504) having an interface (72) for transferring compressed air from a duct (102) for compressed air (48) in the machine spindle (80) of a machine tool.

20. Tool head according to Claim 19, **characterized in that** the interface (552) for transferring cooling lubricant (46) from a duct (602) for cooling lubricant in a lance (86) in a machine spindle (80) of a machine tool is also designed for transferring compressed air (48) from a duct (604) for compressed air (48), said duct (604) coaxially surrounding the duct (602) for cooling lubricant (46) in the lance (86).

21. Method for at least partially subjecting a workpiece to aerosol by means of a nozzle device (42) in a tool head (1) according to one of Claims 1 to 20, wherein the size of an aerosol stream $I_A$ provided by the nozzle device (42) is controlled by setting a pressure difference ($\Delta P$) between the pressure ($P_{116}$) in a control line (116) connected to a control chamber (174) for a closing body (114) that is movable in the nozzle device (42) and the pressure ($P_{76}$) in a compressed-air line (76) connected to a mixing chamber (44) of the nozzle device (42).

**Revendications**

1. Tête d'outil (1, 501, 701) comprenant un axe de tête d'outil (7, 507, 707) servant d'axe de rotation lors du raccordement à une broche de machine rotative (80, 580) d'une machine-outil et comprenant un corps de base (2, 502, 702) qui retient un coulisseau (6, 506, 706) déplaçable pouvant être muni d'un outil de coupe (10, 510, 710), le corps de base (2, 502, 702) portant un système pulvérisateur (36, 536, 736) pour fournir un lubrifiant de refroidissement aérosol (38, 738) au niveau de l'outil de coupe (10, 510, 710),
**caractérisée en ce que**
le système pulvérisateur comprend un dispositif de buse (42, 742) reçu au niveau du coulisseau (6, 506, 706) pour produire le lubrifiant de refroidissement aérosol (38, 738), lequel dispositif peut être alimenté, par le biais d'une conduite (76, 576, 776) pour fluide gazeux, en particulier pour de l'air comprimé, avec une portion de conduite (68) déplaçable, compensant un mouvement de déplacement du coulisseau (6, 506, 706) dans le corps de base (2, 502, 702), et par le biais d'une conduite (66, 566, 766) pour lubrifiant de refroidissement avec une portion de conduite (68, 768) déplaçable compensant un mouvement de déplacement du coulisseau (6, 506, 706) dans le corps de base (2, 502, 702), en fluide gazeux (48, 548, 748), en particulier en air comprimé, et en lubrifiant de refroidissement (46, 546, 746).

2. Tête d'outil selon la revendication 1, **caractérisée en ce que** le dispositif de buse (42) présente une chambre de mélange (44) agissant en tant que buse venturi, à laquelle du fluide gazeux (48) peut être acheminé par un canal de fluide (148) connecté à la conduite (76) pour fluide gazeux (48) et à laquelle du lubrifiant de refroidissement (46) peut être acheminé par un canal de fluide (150) connecté à la conduite (66) pour lubrifiant de refroidissement.

3. Tête d'outil selon la revendication 2, **caractérisée en ce que** le dispositif de buse (42), pour la libération et le blocage de l'ouverture de sortie (112) du dispositif de buse (42), présente un corps de fermeture (114) déplaçable parallèlement à l'axe de tête d'outil (7).

4. Tête d'outil selon la revendication 3, **caractérisée en ce que** la taille de la chambre de mélange (44) peut être modifiée par déplacement du corps de fermeture (114).

5. Tête d'outil selon la revendication 4, **caractérisée en ce que** le dispositif de buse (42) présente une cavité (152) qui est divisée par le corps de fermeture (114) en la chambre de mélange (44) et en une chambre de commande (174).

6. Tête d'outil selon l'une quelconque des revendications 3 à 5, **caractérisée en ce que** des moyens sont prévus pour l'ajustement de la course du mouvement du corps de fermeture (114).

7. Tête d'outil selon la revendication 5 ou 6, **caractérisée en ce que** le corps de fermeture (114) est déplacé, du fait d'une différence entre la pression dans la chambre de mélange (44) et la pression dans la chambre de commande (174), dans la direction de la pression la plus basse.

8. Tête d'outil selon la revendication 7, **caractérisée en ce que** la chambre de commande (174) est raccordée par le biais d'une soupape de pression différentielle (118), pour l'ajustement de la pression dans la chambre de commande (174), à la conduite (76) pour fluide gazeux (48).

9. Tête d'outil selon la revendication 8, **caractérisée en ce que** la soupape de pression différentielle (118) présente un corps de fermeture déplaçable (180, 280, 380) qui, dans un premier ajustement, bloque un canal de commande (116, 216, 316) connecté à la chambre de commande lorsque la différence de pression entre la pression dans la chambre de mélange (44) et la pression dans la chambre de commande (174) dépasse une première valeur seuil, qui, dans un ajustement différent du premier ajustement, relie la conduite (76, 176, 276) pour fluide gazeux (48) au canal de commande (174) afin de provoquer un équilibre de pression, lorsque la différence de pression entre la pression dans la chambre de mélange (44) et la pression dans la chambre de commande (174) dépasse une deuxième valeur seuil différente de la première valeur seuil, qui est inférieure à la première valeur seuil, et qui, dans un troisième ajustement, ventile la chambre de commande (174), lorsque la différence de pression entre la pression dans la chambre de mélange (44) et la pression dans la chambre de commande (174) est en dessous d'une troisième valeur seuil différente de la première valeur seuil, laquelle est inférieure à la deuxième valeur seuil.

10. Tête d'outil selon la revendication 9, **caractérisée en ce que** le corps de fermeture (180, 280, 380) est en liaison fonctionnelle avec un moyen générateur de force (184, 284, 319), qui compense une force de pression agissant sur le corps de fermeture (180, 280, 380).

11. Tête d'outil selon la revendication 10, **caractérisée en ce que** le moyen générateur de force est un élément de ressort (284) avec une précontrainte modifiable pour l'ajustement de la différence de pression entre la pression dans la chambre de mélange (44) et la pression dans la chambre de commande (174) ou le moyen générateur de force pour l'ajustement de la pression dans la chambre de commande (174) est un moteur électrique réalisé de préférence sous forme de moteur linéaire (319) ou est un élément piézoélectrique.

12. Tête d'outil selon l'une quelconque des revendications 9 à 11, **caractérisée en ce que** le corps de fermeture (180) est guidé de manière mobile linéairement dans un corps de soupape (188) avec un axe de déplacement (206) parallèle à l'axe de tête d'outil (7).

13. Tête d'outil selon la revendication 12, **caractérisée en ce que** l'axe de déplacement (206) du corps de soupape (188) est en alignement avec l'axe de tête d'outil (7).

14. Tête d'outil selon l'une quelconque des revendications 3 à 13, **caractérisée en ce que** le dispositif de buse (742) présente un entraînement électrique (904) pour le déplacement du corps de fermeture (814).

15. Tête d'outil selon la revendication 14, **caractérisée en ce que** l'entraînement électrique (904) est connecté à un cercle de commande (922) qui commande la position du corps de fermeture (814) en fonction d'un écoulement de fluide détecté au moyen d'un débitmètre (924) disposé dans la conduite (876) pour fluide gazeux.

16. Tête d'outil selon l'une quelconque des revendications 1 à 15, **caractérisée en ce que** dans la conduite (65) pour lubrifiant de refroidissement (46) est disposée une soupape d'arrêt (122) commandée par la pression dans la conduite (76) pour fluide gazeux (48), laquelle soupape d'arrêt supprime l'alimentation en lubrifiant de refroidissement (46) dans le dispositif de buse (42) lorsque la pression dans la conduite (76) pour fluide gazeux (48) est en dessous d'une valeur seuil.

17. Tête d'outil selon la revendication 16, **caractérisée en ce que** la soupape d'arrêt (122) présente un corps de fermeture (124) déplaçable parallèlement à l'axe de tête d'outil (7), qui, dans un premier ajustement, bloque la conduite (66) pour lubrifiant de refroidissement (46) et qui, dans un deuxième ajustement différent du premier ajustement, libère la conduite (66) pour lubrifiant de refroidissement (46).

18. Tête d'outil selon la revendication 17, **caractérisée en ce que** la soupape d'arrêt (122) présente une chambre de commande (132) connectée à la conduite (76) pour fluide gazeux (48), afin de solliciter le corps de fermeture (124) avec une force de pression à l'encontre de la force d'un moyen de ressort (138), et/ou **en ce que** la soupape d'arrêt (122) est reçue au niveau du coulisseau (6), et/ou **en ce que** le corps de base (2) contient une soupape (54) qui ferme la conduite (66) pour lubrifiant de refroidissement dans le corps de base (2), lorsque le corps de base (2) est séparé d'une broche de machine (80), et/ou **en ce que** le corps de base (2, 502) présente un arbre (4, 504) avec une portion réalisée sous forme de tourillon d'ajustement (5, 505) pour le raccordement à la broche de machine rotative (80, 580) d'une machine-outil, qui présente une interface (52, 552) pour le transfert de lubrifiant de refroidissement depuis un canal (102, 602) pour lubrifiant de refroidissement (46) dans une lance (86, 586) dans la broche de machine (80, 580) d'une machine-outil.

19. Tête d'outil selon l'une quelconque des revendications 1 à 18, **caractérisée en ce que** le corps de base (2, 502) présente un arbre avec une portion réalisée sous forme de tourillon d'ajustement (5, 505) pour le raccordement à la broche de machine rotative (80, 580) d'une machine-outil, qui présente une interface (72) pour le transfert d'air comprimé depuis un canal (102) pour air comprimé (48) dans la broche de machine (80) d'une machine-outil.

20. Tête d'outil selon la revendication 19, **caractérisée en ce que** l'interface (552) pour le transfert de lubrifiant de refroidissement (46) depuis un canal (602) pour lubrifiant de refroidissement dans une lance (86) dans une broche de machine (80) d'une machine-outil est également conçue pour le transfert d'air comprimé (48) depuis un canal (604) pour air comprimé (48) entourant coaxialement le canal (602) pour lubrifiant de refroidissement (46) dans la lance (86).

21. Procédé pour solliciter au moins en partie une pièce avec un aérosol au moyen d'un dispositif de buse (42) dans une tête d'outil (1) selon l'une quelconque des revendications 1 à 20, dans lequel la taille d'un courant d'aérosol $I_A$ fourni par le dispositif de buse (42) est commandée par ajustement d'une différence de pression ($\Delta P$) entre la pression ($P_{116}$) dans une conduite de commande (116) connectée à une chambre de commande (174) pour un corps de fermeture (114) déplaçable dans le dispositif de buse (42) et la pression ($P_{76}$) dans une conduite d'air comprimé (76) connectée à une chambre de mélange (44) du dispositif de buse (42).

Fig.1

Fig.2

Fig.3

Fig.4

Fig.6

Fig.5

Fig.7      Fig.8      Fig.9

EP 2 699 371 B1

Fig.10a

Fig.10b

Fig.11

Fig.12

Fig.13

Fig.14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1072356 A
- EP 0491724 B1